# FASCICULE DE BREVET EUROPEEN

(11) **EP 1 743 116 B1**
(45) Date de publication et mention de la délivrance du brevet: **04.06.2014**
(21) Numéro de dépôt: 05767569.6
(22) Date de dépôt: 29.04.2005
(51) Int. Cl.: F16L 59/02, F16L 59/065

(54) **COMPLEXE ISOLANT A ENVELOPPE METALLIQUE POUR CONDUITE**
ISOLATIONSKOMPLEX MIT METALLSCHICHT FÜR ROHRLEITUNG
INSULATING COMPLEX WITH METAL SHEATH FOR PIPE

(30) Priorité: 07.05.2004 FR 0404966
(43) Date de publication de la demande: 17.01.2007
(73) Titulaire: SAIPEM S.A., 78180 Montigny-le-Bretonneux (FR)
(72) Inventeur: CHENIN, Laurent, F-78320 Le Mesnil Saint Denis (FR); PIONETTI, Régis, F-50450 La Baleine (FR); ROCHER, Xavier, F-78400 Chatou (FR)
(74) Mandataire: Domange, Maxime
(86) Numéro de dépôt international: PCT/FR2005/001067
(87) Numéro de publication internationale: WO 2005/121629

(56) Documents cités:
- EP-A- 0 790 366
- EP-A- 1 101 877
- WO-A-01/38779
- US-A- 4 985 106
- US-A- 5 798 154

## Description

La présente invention concerne un complexe d'isolation pour tout type de conduite notamment des conduites sous-marines véhiculant des fluides chauds ou froids. La présente invention concerne plus particulièrement un complexe isolant apte à être placé dans l'espace entre deux conduites coaxiales comprenant une conduite interne et une conduite externe, de préférence des conduites sous-marines destinées aux grandes profondeurs.

La présente invention concerne en particulier l'isolation des conduites sous-marines installées sur les champs pétroliers par très grandes profondeurs, ainsi qu'aux conduites en suspension entre le fond de la mer et un navire de surface ancré sur ledit champ pétrolier.

Elles peut s'appliquer aussi dans les domaines de l'aéronautique et de l'industrie spatiale où la notion de poids est de prime importance.

Dans la majorité des domaines industriels on recherche des systèmes d'isolation performants pour maintenir les fluides véhiculés dans les tuyauteries à température constante, de manière à ce que les transferts entre équipements puissent être rendus possibles sur des distances importantes, atteignant par exemple plusieurs centaines de mètres, voire plusieurs kilomètres. De telles distances sont courantes dans les industries telles que les raffineries de pétrole, les installations de gaz naturel liquéfié (-165°C), les champs pétroliers sous-marins lesquels s'étendent sur plusieurs dizaines de kilomètres. De tels champs pétroliers sont développés par des profondeurs d'eau de plus en plus importantes laquelle peut dépasser 3000m.

De nombreux systèmes ont été développés pour atteindre un haut niveau de performance thermique et des versions spécifiques ont été développées pour répondre de manière plus adaptée aux grands fonds, c'est à dire pour résister à la pression du fond de la mer. En effet, la pression de l'eau étant sensiblement de 1 bar pour 10m de profondeur, la pression à laquelle doit résister la conduite est alors d'environ 100 bars pour 1000m de profondeur et d'environ 300 bars pour 3000m.

Les technologies les plus performantes qui ont été développées pour atteindre cet objectif sont les technologies dites "Pipe In Pipe" ou PIP, c'est à dire "conduite dans une conduite", dans laquelle une conduite interne véhicule le fluide et une conduite externe coaxiale à la précédente est en contact avec le milieu ambiant, c'est à dire l'eau. L'espace annulaire entre les deux conduites peut être rempli d'un matériau isolant ou encore être vidé de tout gaz.

Dans le cas d'utilisation d'un matériau isolant de type mousse de polyuréthane sous atmosphère gazeuse, les épaisseurs nécessaires sont en général importantes, par exemple 5 ou 10 cm, ce qui nécessite l'utilisation d'une conduite extérieure de fort diamètre. Or, cette conduite doit résister à la pression du fond sans imploser ce qui implique un surcroît d'épaisseur d'acier pour tenir à la pression et un surcroît de surface d'acier en raison de l'accroissement du diamètre. De plus, l'espace annulaire rempli de mousse crée un flottabilité supplémentaire que l'on est souvent obligé de compenser par augmentation du poids de la conduite, qui est souvent obtenu par augmentation de l'épaisseur de la conduite externe. Ainsi, bien souvent, le dimensionnement de la conduite externe est gouverné par des considération de non-flottabilité de l'ensemble PIP, plus que par la nécessité de résister à la pression de fond.

Pour palier cet inconvénient, des technologies beaucoup plus performantes ont été développées, dans lesquelles on cherche à minimiser l'espace annulaire entre conduites, en particulier avec la création d'un vide dans la zone interstitielle. En effet le vide ainsi créé est alors un excellent isolant, et un espace annulaire de 5 à 10 mm est suffisant. Le PIP est alors comparable en termes de performances aux "bouteilles thermos" en verre connues de tout un chacun. Pour améliorer l'isolation, on limite en outre le rayonnement en enveloppant la partie externe de la conduite interne d'un film réfléchissant, en général constitué d'un film aluminium éventuellement associé à des matériaux thermoplastiques.

Les conduites sont alors préfabriquées en longueurs unitaire de 6 à 12 m puis, lors de la pose assemblées les unes aux autres pour former une liaison continue. En cas d'endommagement d'une ou plusieurs longueurs de PIP, il se crée alors des ponts thermiques qui, s'ils restent ponctuels et en nombre limité n'ont pas de répercussions significatives sur le comportement de la conduite, laquelle continue en général à assurer sa fonction dans le temps.

Les conduites ainsi réalisées dans la technologie PIP basées sur un vide poussé présentent cependant l'inconvénient suivant. Le fluide en provenance des puits sous-marins est un mélange de pétrole brut, d'eau, de gaz et de composés agressifs divers tels le CO₂ et H₂S. La conduite interne, réalisée en général en acier au carbone, est sujette à des phénomènes de corrosion dus au fluide et qui ont pour conséquence de produire de l'hydrogène atomique H+, ce dernier ayant tendance à migrer sous forme atomique à travers la matrice de fer et de carbone de l'acier, pour venir se re-combiner, sur la paroi externe de la conduite intérieure, donc dans l'espace annulaire entre les deux conduites coaxiales, pour former du gaz hydrogène de formule H2. Le vide créé dans cet espace annulaire se dégrade alors en raison de l'augmentation de la pression d'hydrogène, lequel est un excellent conducteur de la chaleur, ce qui va à l'encontre de l'objectif visé.

Divers moyens ont été développés pour palier cet inconvénient. Un moyen connu consiste en l'introduction dans l'espace annulaire d'un composé connu sous le nom de "getter", dont la fonction est d'absorber ledit hydrogène gazeux pour maintenir la pression partielle d'hydrogène au plus bas et ainsi conserver le niveau de vide souhaitable pendant toute la durée de vie du champ, laquelle peut dépasser 20 ans. Le "getter" est introduit lors de la fabrication du PIP et avant le scellement définitif après la mise sous vide,

Il a aussi été envisagé d'utiliser, pour la conduite intérieure au moins, des aciers résistant à la corrosion, tels des inox ou du duplex, mais les conduites deviennent alors extrêmement coûteuses et ne constituent en général pas une solution acceptable sur le plan, économique.

Il est également courant de revêtir l'intérieur de la conduite d'un film protecteur, par exemple de type époxy, dont la fonction est d'éviter le contact entre les agents corrosifs et l'acier au carbone. Toutefois, au droit des raboutages de conduites effectués sur site, le procédé de soudage détruit localement cette protection et crée des zones sujettes à corrosion. De plus, en cas d'endommagement de ce revêtement par le passage d'outils de nettoyage ou encore par abrasion due au sable véhiculé en même temps que les effluents, la surface risque de se dégrader dans le temps et le phénomène de migration d'hydrogène atomique de s'amplifier avec le temps.

On connaît par ailleurs la technologie développée notamment dans le domaine des équipements électroménagers basée sur la réalisation de panneaux plans constitués d'une matière isolante poreuse confinée dans une enveloppe constituée d'un film, en général thermosoudé à ses extrémités, dans lequel on crée, préalablement au scellement définitif, un vide poussé, c'est à dire de l'ordre de 1 millibar ou moins. Le film est en général un complexe multicouches comportant une barrière constituée, en général, d'un film d'aluminium continu associé par collage ou adhérisation à des films thermoplastiques, ces derniers permettant d'assurer le scellement de l'ensemble. De tels films sont couramment utilisés dans le domaine agroalimentaire pour conserver sous atmosphère neutre ou sous vide des produits tels que le lait, les jus de fruits et le café.

Ce type d'isolation est performant car elle permet de limiter les transferts de calories par conduction, convexion et rayonnement et de créer des écrans réflecteurs dont la fonction est de renvoyer les rayonnements énergétiques. La limitation de la conduction est obtenue par appauvrissement des molécules en présence ou par piégeage de celles-ci au sein d'une structure organisée avec des cavités au sein de la matière isolante poreuse, de préférence nano-poreuse. De tels matériaux isolants poreux et nano-poreux sont bien connus et seront décrits ci-après.

On a décrit dans WO 01/38779 de la demanderesse, un complexe tubulaire isolant apte à être placé autour d'une conduite et plus particulièrement dans l'espace entre deux conduites coaxiales comprenant une conduite interne et une conduite externe, de préférence des conduites sous-marines destinées aux grandes profondeurs, caractérisé en ce qu'il comprend :
- une enveloppe flexible et un matériau isolant confiné sous vide entre la paroi interne et la paroi externe de ladite enveloppe, ledit matériau isolant étant préformé sous forme de tube rigide
- chacune desdites parois étant constituée d'un film multicouches souple comprenant au moins un film métallique d'épaisseur très faible jouant le rôle de barrière d'étanchéité moléculaire, associé à des films thermoplastique assurant la résistance et la soudabilité de l'enveloppe.

En pratique, le film métallique est le plus mince possible pour éviter les ponts thermiques aux extrémités de l'enveloppe dans la direction longitudinale, à savoir inférieur à 10 µm,

Ledit matériau isolant nano-poreux se présente sous forme de tube.

Les extrémités opposées dans la direction longitudinale XX' de ladite conduite et desdits complexes tubulaires étant constituées chacune par les bords respectifs desdites parois interne et externe dudit complexe tubulaire, scellés l'un contre l'autre, de préférence par collage ou thermo-soudage.

Cette typologie est particulièrement intéressante, car ladite configuration tubulaire ne présente pas de discontinuité dans le sens radial circulaire, les seules discontinuités d'isolation étant situées à chacune des extrémités longitudinales de ladite enveloppe tubulaire.

Dans ce brevet WO 01/38779, on décrit plus particulièrement la manière de préparer les enveloppes cylindriques et notamment la manière d'assembler et de souder aux extrémités les parois interne et externe en créant des plis destinés à résorber les différences de développé de la paroi interne et de la paroi externe de l'enveloppe.

Dans un premier mode de réalisation, on crée des plis dans les bords d'extrémité de la paroi externe. Dans un deuxième mode de réalisation, c'est la paroi interne qui comprend des plis dans sa zone centrale en contact avec ladite conduite, entre les extrémités opposées du complexe dans la direction longitudinale. Ces plis permettent également de gérer les réductions de diamètre de la paroi externe cylindrique lors de la mise sous vide de l'enveloppe sans risque de perte d'étanchéité de l'enveloppe. En effet, ces plis ne présentent aucun inconvénient car, dans le cas d'une enveloppe constituée d'un film multi-couches thermo-plastique souple en raison de la souplesse de ladite enveloppe, les plis s'écrasent naturellement sur eux-mêmes sans créer de surépaisseur significative ni même de zone à géométrie instable, l'enveloppe restant globalement quasi circulaire.

Les complexes isolants tubulaires décrits dans WO 01/38779 présentent toutefois deux inconvénients principaux :
- ils doivent nécessairement être préparés sous forme tubulaire, ce qui représente un encombrement relativement important et crée des difficultés de transport lorsqu'ils ne sont pas fabriqués sur le site d'utilisation car ils sont extrêmement fragiles et en cas de choc ou de perforation par un simple trou ou une épingle, le complexe tubulaire perd alors toute sa performance,
- en second lieu, les propriétés des films thermoplastiques multicouches mis en oeuvre ne garantissent pas un maintien du vide sur une durée de vie supérieure à 20 ans, en raison de la migration, même minime, des gaz à travers l'enveloppe multicouches et au niveau des soudures entre matériaux thermoplastiques,
- enfin, la tenue en température des films thermoplastiques multicouches est très limitée et ne permet pas d'atteindre des températures de 150 à 200°C que l'on rencontre sur certains champs pétroliers.

On connaît des panneaux plans confinés dans une enveloppe réalisée à partir de feuillards métalliques, en acier notamment en acier inoxydable ou en aluminium et soudés de manière étanche sur toute la périphérie qui présentent une durée de vie beaucoup plus importante que les panneaux plans à enveloppe thermoplastique du type décrit ci-dessus, car la migration des molécules de gaz à travers les zones de soudage sont quasiment nulles dans le cas des enveloppes en métal, ce qui permet d'atteindre des durées de vie supérieures à 50 ans. Le brevet EP-0 857 833 décrit un mode de fabrication d'un tel panneau dans une configuration plane rectangulaire.

Dans le cas de l'utilisation de panneaux plans isolants réalisés à partir de feuillards métalliques tels que décrits dans le brevet EP-0,857,833 le cintrage d'un tel panneau pour obtenir une forme circulaire est quasiment impossible en raison de la rigidité dudit feuillard, ainsi que de la fragilité de la paroi constituant la tranche, celle-ci étant constituée d'un feuillard d'épaisseur extrêmement faible, quelques centièmes de millimètres, de manière à minimiser les ponts thermiques entre la face externe et la face interne du complexe isolant sous vide.

De même, lorsque l'on cherche à remplacer l'enveloppe multicouche thermoplastique des complexes isolants tubulaires de WO 01/38779 par un feuillard métallique, même très mince, la rigidité locale dudit feuillard reste élevée et, lors du tirage au vide, l'effondrement de l'enveloppe externe venant s'appuyer sur la matière isolante conduit à des cloquages similaires à ceux d'une cannette de bière en aluminium ou en acier mince que l'on écrase radialement à la main. Il se forme alors des cabossages localisés et il en résulte, non seulement des points de faiblesse, mais aussi, et de manière aléatoire, une forme localement non circulaire présentant des angles saillants plus ou moins prononcés, ladite forme venant alors s'inscrire dans un cercle de diamètre supérieur au diamètre nominal de l'enveloppe externe au repos, risquant ainsi d'interférer localement avec la face interne de la conduite externe du PiP.

Ainsi le problème posé est de fournir un complexe isolant comprenant un matériau isolant nano-poreux confiné sous vide dans une enveloppe apte à être mise en place sous forme tubulaire autour d'une conduite et pouvant être utilisé dans une grande variété d'applications et plus particulièrement pour l'isolation des conduites sous-marines immergées à grande profondeur et donc de répondre aux conditions rencontrées dans les développements de champs pétroliers dans les mers profondes.

Plus particulièrement, le problème posé est de fournir un complexe isolant présentant des propriétés et performances améliorées par rapports à celles de la technique antérieure, en particulier en terme de résistance mécanique, de tenue en température, laquelle peut atteindre 150 à 200°C, voire plus, et une durée de vie des propriétés d'isolation thermique, de l'ordre de 50 ans, voire plus, et pouvant être certifiée ou répondant à des réglementations administratives.

Un autre but de la présente invention est de fournir un complexe isolant qui puisse être préparé sous forme quasiment plane et apte à être mis sous vide, puis être cintré pour obtenir une forme tubulaire circulaire, sans créer de déformation dommageable, que ce soit en terme de perte d'étanchéité de l'enveloppe ou en terme de dégradation de la conduite dans laquelle ils sont insérés, notamment lors de déformation par pliage ou d'ovalisation de ladite forme circulaire.

Les exigences en matière d'isolation thermique requises selon la présente invention sont également :
- une isolation de très haute performance correspondant à des valeurs de coefficient de transfert thermique de l'ordre de quelques milliwatts,
- une isolation de faible encombrement pour pouvoir se loger dans des espaces confinés réduits (c'est le cas dans l'aérospatiale, l'aéronautique, le pétrole en mer ou à terre),
- une isolation thermique légère pour ne pas perturber et/ou alourdir la structure primaire à isoler (l'isolation ne doit pas induire des efforts et des contraintes hors normes),
- une isolation thermique facile d'emploi et adaptable à toutes les formes de tuyauterie,
- une isolation thermique couvrant une large gamme de températures depuis les très basses températures (-150°C ou moins) jusqu'à des températures élevées de l'ordre de 150 à 200°C, voire plus,

Pour ce faire, la présente invention fournit un complexe isolant selon la revendication 1.

La paroi interne, ou ci-après intrados, correspond à la paroi de l'enveloppe placée contre la conduite, notamment la conduite interne dans le cas où le complexe tubulaire est placé dans l'espace entre deux conduites coaxiales. De même, la paroi externe ou ci-après extrados, correspond à la paroi de l'enveloppe placée de l'autre côté dudit matériau isolant sur sa face externe libre ou contre la face intérieure de la conduite externe lorsque le complexe tubulaire est placé dans l'espace entre deux conduites coaxiales.

On comprend donc que l'enveloppe est constituée uniquement de feuillards métalliques, lesquels présentent des caractéristiques "semi-rigides", à savoir qu'ils peuvent être déformés mais sont capables de tenir en forme par eux-mêmes une fois mis en forme à la manière d'une canette de boisson ou d'une boite de conserve.

On entend par "paroi constituée à partir du feuillard métallique rectangulaire ou parallélogramme" que la surface développée plane du feuillard constitutif de ladite paroi est rectangulaire ou parallélogramme.

On comprend que les "bords d'extrémité" des parois et du complexe sont les bords, à chaque extrémité dans la direction longitudinale, lorsque le complexe est mis en place autour de la conduite.

On entend par "bords longitudinaux", les bords qui, dans le cas de feuillards rectangulaires, s'étendent dans la direction longitudinale axiale du complexe après mise en place autour de la conduite ou, dans le cas de feuillards parallélogrammes, les bords définissant une courbe hélicoïdale d'axe s'étendant dans ladite direction longitudinale axiale du complexe après mise en place autour de la conduite. Ces "bords longitudinaux" sont de préférence les bords de plus grande longueur par rapport à celle desdits bords d'extrémité.

Les bords desdites parois sont scellés entre eux de préférence par collage ou par soudage.

On entend par bords longitudinaux de chaque paroi scellés entre eux que les deux bords longitudinaux de la paroi interne sont scellés entre eux et les deux bords longitudinaux de la paroi externe sont scellés entre eux.

On entend par bords longitudinaux de chaque paroi scellés à ceux de l'autre paroi que les deux bords longitudinaux opposés parallèles de la paroi interne sont scellés aux deux bords respectifs longitudinaux opposés parallèles de la paroi externe.

On entend par « ondulation transversale s'étendant dans la direction longitudinale » que la paroi comporte des cannelures s'étendant longitudinalement et dont le contour de la section transversale dessine des creux et des bosses ou des vagues, lorsque l'on parcourt la paroi dans une direction perpendiculaire à la direction longitudinale, de telle sorte que :
- la distance entre lesdites parois interne et externe de l'enveloppe dans une direction perpendiculaire à ladite direction longitudinale est variable, et
- la distance entre lesdites parois interne et externe de l'enveloppe dans ladite direction longitudinale est sensiblement constante entre lesdites extrémités opposées, excepté les zones de transition entre lesdites extrémités opposées scellées du complexe et les extrémités des ondulations dans ladite direction longitudinale

Ces ondulations offrent une réserve d'étirement de la paroi externe par rapport à la paroi interne ou, respectivement le cas échéant, de resserrement de la paroi interne par rapport à la paroi externe, ce qui permet ainsi :
- d'une part de mettre en forme cylindrique ou tubulaire lesdits complexes appliqués contre une conduite ou enfilés autour d'une conduite, l'amplitude ou la hauteur des ondulations sur la paroi externe diminuant après mise en forme et permettant de constituer une réserve d'étirement nécessaire de la paroi externe, ou inversement l'amplitude ou la hauteur des ondulations sur la paroi interne augmentant après mise en forme et permettant de constituer une réserve de resserrement nécessaire de la paroi interne, et
- d'autre part ces ondulations permettent de faire subir une mise sous vide partiel à l'enveloppe en contrôlant la déformation de la paroi ondulée par écrasement et donc resserrement desdites ondulations, c'est-à-dire une diminution de ce qui correspond à la longueur d'onde ou largeur de l'ondulation, et respectivement augmentation de l'amplitude ou hauteur des ondulations.

On comprend donc que les ondulations sont préformées avant cintrage et ce sont ces ondulations qui permettent de créer le surplus dimensionnelle de l'une des parois, par resserrement ou étirement des ondulations, lorsque les parois sont mises l'une pardessus l'autre autour d'une conduite cylindrique.

En général et de préférence, les feuillards métalliques desdites parois externe et interne, dont l'un au moins est ondulé, s'inscrivent dans des rectangles de même dimension et la dimension en largeur du feuillard ondulé après développement à plat (à savoir après suppression des ondulations) serait donc supérieure à celle de l'autre paroi non ondulée après mise à plat.

Les caractéristiques géométriques desdites ondulations dépendent de nombreux facteurs, tel le diamètre de ladite forme tubulaire, l'épaisseur du matériau isolant et l'épaisseur et la qualité mécanique du feuillard métallique en termes d'allongement à la rupture et seront explicitées plus avant dans la description de l'invention.

A titre indicatif les ondulations auront avantageusement un rayon de courbure correspondant à 10 à 100 fois, de préférence de 20 à 50 fois, l'épaisseur dudit feuillard, ce qui correspond à une amplitude d'ondulation correspondant, en position ramassée, sensiblement au double dudit rayon, et, en position étirée, à 40 à 80% de la même valeur.

Ces ondulations peuvent être crées par emboutissage des feuillards métalliques par des techniques connues de l'homme de l'art, ou par formage à la molette, comme utilisé dans la fabrication des tôles ondulées.

Plus particulièrement, lesdits feuillards métalliques sont réalisés en acier inoxydable ou aluminium, de préférence d'une épaisseur de 0,05 à 0,5 mm.

Plus particulièrement, ledit matériau isolant présente une épaisseur de 5 à 75 mm, de préférence de 10 à 50 mm.

Pour réaliser les performances requises selon la présente invention, il faut une isolation thermique qui stoppe la convection. Il existe plusieurs types de matériaux isolants nano-poreux rigides ou souples, connus, capables de réaliser ce phénomène.

Avantageusement, ledit matériau isolant est un matériau nano-poreux obtenu à partir des matériaux suivants connus de l'homme de l'art :
- les matériaux inorganiques en poudre, en granules ou en fibres tissées ou non tissées, notamment à base de substances minérales choisies parmi la silice, l'alumine, la perlite ou respectivement à base de fibres de verre ou fibres de céramique, et,
- les matériaux organiques à cellules ouvertes, de préférence de la mousse de polyuréthane, et
- des matériaux mixtes organiques/inorganiques tels que la mousse polyuréthane renforcée par des fibres ou des matériaux composites.

Dans un mode de réalisation, le matériau isolant à l'intérieur de la dite enveloppe est un nano-matériau notamment un aérogel, de préférence un aérogel de silice ou d'oxyde de titane. Dans un autre mode de réalisation, le matériau isolant nano-poreux est une mousse de matériau synthétique nano-poreux.

L'un d'entre eux est la mousse polyuréthanne à cellules ouvertes. Dans ce type de matériau nano-poreux, la convection se trouve bloquée, car le libre parcours moyen des molécules de gaz est du même ordre de grandeur que la taille des cellules ouvertes, c'est à dire quelques nanomètres, et les molécules se trouvent alors piégées localement.

On préfère utiliser des matériaux isolants rigides ou semi-rigides pour réaliser directement des formes tubulaires circulaires. Dans le cas de panneaux de formes planes devant être cintrés pour obtenir une forme tubulaire circulaire, on préfère utiliser des matériaux isolants semi-rigides, ou en poudre, en granule, ou encore en vrac dans le cas de fibres de verre de moyenne longueur ou courtes.

On cherche à obtenir des niveaux d'isolation extrêmement poussés, c'est-à-dire des valeurs du coefficient de transfert thermique global, ramené au diamètre intérieur de la conduite intérieure, U≤ 0.5 W/m²K et, pour améliorer les performances de ces matériaux de base, il est important de vider l'enveloppe du gaz qu'elle contient, en général l'air, pour limiter au minimum les échanges thermiques par contact. Le niveau de vide requis dépend du matériau isolant considéré. Ainsi, dans le cas de fibre de verre, le vide doit être extrêmement poussé et donc la pression absolue doit être de l'ordre de 10Pa.

Dans le cas de mousse de polyuréthanne, la pression absolue doit être inférieure à 500Pa, de préférence de 100 à 500Pa.

Dans le cas de silice compactée la pression absolue doit être inférieure à 5000Pa, de préférence de 2500 à 5000Pa.

Et dans le cas des aérogels, la pression absolue doit être inférieure à 10000Pa, ce qui représente un vide peu poussé. Ainsi, il apparaît que pour des matériaux peu sophistiqués, tel la fibre de verre, le niveau de vide requis est extrêmement poussé, alors que pour des aérogels, produits coûteux, le niveau de vide est beaucoup moins contraignant. Le choix d'un type d'isolant est donc effectué sur des critères technico-économiques, et peut varier selon les diamètres des conduites et l'épaisseur de matériau requis, ce qui a une influence considérable sur le volume donc sur le coût de fourniture, le processus de tirage au vide et de scellement restant sensiblement le même. Dans le cas de vide poussé, on intègrera avantageusement du getter au sein du matériau isolant afin que ledit getter absorbe les molécules piégées à la surface desdits matériaux et maintiennent ainsi le niveau de vide recherché. De plus, la présence d'un getter présente l'avantage de continuer le tirage au vide par absorption des molécules de gaz résiduel, après scellement définitif de l'enveloppe, ce phénomène se poursuivant sur plusieurs semaines, voire plusieurs mois en fonction de la porosité interne, et permet couramment d'améliorer de 10 à 30% le niveau de vide.

Dans une première variante de réalisation d'un complexe selon l'invention, les deux dits bords longitudinaux opposés parallèles de chaque paroi sont scellés entre eux et ledit complexe isolant est de forme substantiellement tubulaire, de sorte que :
- chacune desdites extrémités opposées du complexe présente une forme délimitée par les surfaces cylindriques à section circulaire d'axe correspondant à ladite direction longitudinale XX' desdits bords d'extrémité de chacune desdites parois interne et externe, et
- ladite zone ondulée entre lesdites extrémités opposées est définie par une surface cylindrique d'axe longitudinal XX', à section transversale partiellement circulaire comportant desdites ondulations, de préférence au niveau de la paroi externe, et
- l'autre paroi, de préférence ladite paroi interne est définie par une surface cylindrique comportant une section transversale circulaire sans ondulation.

De préférence, dans cette première variante de réalisation, la ou lesdites zones ondulées n'occupent pas toute la périphérie de la paroi, de préférence de la paroi externe, et sont espacées et réparties symétriquement et régulièrement le long du périmètre de ladite section transversale partiellement circulaire, de préférence en trois zones ondulées au moins, de préférence uniformément réparties sur la circonférence, c'est-à-dire disposées sensiblement à 120°.

Dans ce mode de réalisation, les ondulations n'occupent alors que des zones limitées et séparées du périmètre de la section transversale de la paroi.

De préférence, dans cette première variante de réalisation, chacune desdites parois interne et externe est obtenue à partir d'un feuillard métallique rectangulaire, les deux dits bords longitudinaux opposés parallèles de chaque dite paroi étant raboutés l'un sur l'autre, pour former un dit complexe isolant tubulaire.

Les "bords longitudinaux" sont ici les bords de plus grande longueur et s'étendent dans ladite direction longitudinale axiale du complexe isolant tubulaire formé.

De préférence encore, la face tournée vers l'intérieur de l'enveloppe d'un desdits bords longitudinaux est raboutée sur la face tournée vers l'extérieur de l'enveloppe de l'autre dit bord longitudinal opposé.

Cette première variante de réalisation est avantageuse car elle présente un niveau d'isolation constant sur toute la périphérie du complexe tubulaire isolant, et supprime de ce fait tout pont thermique longitudinal le long d'une génératrice.

Dans un mode de réalisation, lesdites extrémités opposées du complexe sont constituées par les faces internes à l'enveloppe desdits bords d'extrémité respectifs dans ladite direction longitudinale XX' de chacune desdites parois interne et externe scellées directement l'une contre l'autre de préférence par collage ou soudage.

Plus particulièrement, lesdites extrémités opposées dans ladite direction longitudinale XX' dudit complexe formées par les bords respectifs desdites parois interne et externe, forment une surface cylindrique de diamètre sensiblement identique au diamètre externe du matériau isolant de forme substantiellement tubulaire confiné dans ladite enveloppe.

On comprend que pour ce faire, lesdits bords d'extrémité opposés dans la direction longitudinale de ladite paroi interne doivent être évasés en s'élargissant radialement au fur et à mesure qu'ils se rapprochent desdites extrémités pour rejoindre la surface interne cylindrique desdits bords d'extrémité de ladite paroi externe. Cet évasement peut être obtenu par un procédé décrit ci-après.

Dans un autre mode de réalisation de cette première variante, lesdites extrémités opposées du complexe sont constituées par les faces interne à l'enveloppe desdits bords d'extrémité respectifs dans ladite direction longitudinale XX', scellés par collage ou de préférence par soudage contre un dispositif de raccordement de forme annulaire comportant un corps principal en matériau isolant rigide, de préférence en matériau composite ou mousse syntactique, de forme annulaire, corps principal dont une face cylindrique interne est de préférence revêtue d'une première virole métallique, sur laquelle est scellée ou de préférence soudée la face interne à l'enveloppe dudit bord d'extrémité de la paroi interne et dont une face cylindrique externe est de préférence revêtue d'une seconde virole métallique, sur laquelle est scellée ou de préférence soudée la face interne dudit bord d'extrémité de la paroi externe.

Dans une seconde variante de réalisation d'un complexe isolant selon l'invention, les deux dits bords longitudinaux de chaque paroi sont scellées aux bords longitudinaux respectifs de l'autre paroi pour former les bords longitudinaux dudit complexe, lesdits bords longitudinaux opposés parallèles dudit complexe n'étant pas raboutés l'un à l'autre lorsque ledit complexe est cintré ou enroulé autour de ladite conduite.

Dans une premier mode de réalisation de cette seconde variante de réalisation, lesdits bords longitudinaux opposés parallèles dudit complexe sont rapprochés l'un de l'autre lorsque ledit complexe est cintré en une couche ou enroulé en spirale en une couche mais sur plusieurs tours autour de ladite conduite, pour recouvrir la conduite en formant une structure tubulaire ouverte d'axe longitudinal XX' présentant une discontinuité entre les deux dits bords longitudinaux du complexe.

Dans un deuxième mode de réalisation de cette seconde variante, ledit complexe est enroulé sur lui-même formant plusieurs couches superposées autour de la conduite à partir d'un même complexe, supprimant ainsi toute discontinuité d'isolation entre les deux dits bords longitudinaux dudit complexe.

On comprend que le cintrage ou cet enroulement du complexe se fait à partir d'un complexe en position sensiblement plane.

On entend ici par « complexe en position sensiblement plane », que la paroi ne comportant pas d'ondulation, de préférence la paroi interne, est une paroi apte à adopter une position sensiblement plane avant cintrage et mise en place autour d'une dite conduite, et l'autre paroi, de préférence ladite paroi externe, est apte à adopter une position dans laquelle les sommets desdites ondulations s'inscrivent sensiblement dans un même plan tangentiel.

Ladite discontinuité de la structure tubulaire ouverte est une discontinuité périphérique en section transversale mais, en outre, une discontinuité dans ladite direction longitudinale, notamment lorsque ledit complexe est enroulé sur plusieurs tours et pas simplement cintré.

On entend par "section transversale", une section dans un plan perpendiculaire à ladite direction axiale longitudinale XX'.

De préférence, dans cette seconde variante de réalisation, ladite zone ondulée recouvre sensiblement toute la largeur de ladite paroi dans la direction transversale, de préférence de ladite paroi externe, lorsque ledit complexe est en position développée sensiblement plane.

On comprend donc que lorsque ledit complexe forme une dite structure tubulaire discontinue, ladite zone ondulée recouvre sensiblement toute la périphérie de la paroi, c'est-à-dire sensiblement tout le périmètre de la section transversale de la paroi, excepté dans la zone de discontinuité de ladite structure tubulaire bien évidemment, et excepté également les zones de transition entre d'une part lesdits bords d'extrémité et bords longitudinaux de ladite paroi ondulée et d'autre part la zone ondulée elle-même.

Dans un mode particulier de cette seconde variante de réalisation, lesdites extrémités opposées du complexe dans ladite direction longitudinale XX' sont constituées par les faces internes à l'enveloppe desdits bords d'extrémité respectifs de chacune desdites parois interne est externe scellées directement l'une contre l'autre de préférence par collage ou soudage, et les bords longitudinaux dudit complexe sont constitués par les faces internes à l'enveloppe desdits bords longitudinaux de chacune desdites parois interne et externe, scellées directement l'une contre l'autre, de préférence par collage ou soudage.

Plus particulièrement, lesdites parois interne et externe sont de forme rectangulaire lorsque ledit complexe est en position développée plane, et après dit cintrage dudit complexe autour d'une dite conduite, ledit complexe forme une dite structure tubulaire ouverte présentant une discontinuité le long d'une génératrice dans ladite direction longitudinale XX'.

Plus particulièrement encore, lesdites extrémités opposées dans ladite direction longitudinale dudit complexe formées par les bords respectifs desdites parois interne et externe, forment une surface cylindrique ouverte le long de sa génératrice dans ladite direction longitudinale, surface cylindrique de diamètre sensiblement identique au diamètre interne du matériau isolant de forme substantiellement tubulaire confiné dans ladite enveloppe.

Dans un autre mode de réalisation de cette seconde variante de complexe isolant selon l'invention, lesdits bords d'extrémité et bords longitudinaux desdites parois interne et externe définissent un parallélogramme comprenant un angle de préférence de 15 à 60° lorsque ledit complexe est en dite position développée plane, ledit parallélogramme étant apte à être cintré et, le cas échéant, enroulé en spirale en une seule couche sur plusieurs tours autour d'une dite conduite pour former une dite structure tubulaire présentant une discontinuité le long d'une courbe hélicoïdale formée par l'espace entre lesdits bords longitudinaux dudit complexe, non raboutés l'un à l'autre après cintrage et, le cas échéant, enroulement dudit complexe autour de la conduite.

On entend ici par "bords longitudinaux", les bords de plus grande longueur. Ces bords de plus grande longueur correspondent aux bords d'extrémité dans une direction transversale perpendiculaire à ladite direction longitudinale XX' de la surface développée plane dudit feuillard métallique parallélogramme. Après enroulement autour de la conduite pour former une dite structure tubulaire, lesdits bords longitudinaux dans le cas d'un parallélogramme, ne s'étendent pas dans ladite direction longitudinal axiale XX' du complexe mais forment une hélice.

Dans cette seconde variante, le matériau d'isolation doit nécessairement être déformable, c'est-à-dire être souple ou semi-rigide et sera avantageusement constitué d'un matériau pulvérulent, en granule ou encore, dans le cas de matériau fibreux de type fibre de verre, en vrac, en tissé ou en non tissé.

Le nombre des ondulations varie selon que le complexe est sous forme tubulaire continue selon ladite première variante explicitée ci-avant, ou selon que le complexe est obtenu par cintrage ou enroulement d'un panneau plan selon ladite seconde variante explicitée ci-avant.

Dans le cas de la première variante, les ondulations doivent résorber la surlongueur circonférentielle correspondant au jeu existant entre ladite paroi externe et le matériau isolant, jeu nécessaire pour pouvoir enfiler ladite paroi externe autour de l'isolant, ce qui correspond à une variation de diamètre de, par exemple, δD=2 à 20 mm, donc une surlongueur circonférentielle δC=πxδD, ce qui correspond à une valeur théorique de δC=6,3 à 63 mm, chacune des ondulation étant capable de résorber de 0,5 à 2 mm selon le rayon de courbure de ladite ondulation.

Dans le cas de la seconde variante, les ondulations doivent pouvoir fournir la surlongueur circonférentielle lorsque le panneau passe d'une configuration plane à une configuration cintrée. La surlongueur nécessaire est alors fonction de la seule épaisseur de l'isolant. Ainsi, pour un isolant d'épaisseur, par exemple de e=40mm, la surlongueur circonférentielle nécessaire sera δC=2xπxe, soit sensiblement δC=251 mm, alors que si l'épaisseur de l'isolant est par exemple de e=12mm, la surlongueur circonférentielle nécessaire ne sera que δC=75 mm, ce qui représente un nombre moins important d'ondulations que l'on répartira de manière uniforme sur le panneau.

Dans les deux variantes de réalisation selon l'invention, avantageusement, ladite enveloppe comprend au moins un orifice obturable permettant une mise sous vide partiel de l'enveloppe, de préférence une pluralité d'orifices obturables, situé de préférence encore dans les zones ne comportant pas d'ondulation, de préférence encore sur la paroi externe,.

On comprend que cet orifice est destiné à coopérer avec une pompe à vide qui y est adaptée pour mettre l'enveloppe sous vide, puis scellé par un obturateur, de préférence soudé ou collé.

Dans la seconde variante de réalisation selon l'invention, on comprend que les orifices obturables de mise sous vide pourront être réalisés sur la paroi interne, mais dans la première variante de réalisation, ils seront avantageusement réalisés dans les zones non ondulées de la paroi externe.

La présente invention a également pour objet une conduite isolée, de préférence conduite sous-marine destinée aux grandes profondeurs caractérisée en ce qu'elle comprend des complexes tubulaires unitaires placés autour de ladite conduite selon l'invention.

Plus particulièrement, lesdits complexes tubulaires unitaires sont disposés de façon contiguë les uns à la suite des autres dans ladite direction longitudinale XX' autour d'une dite conduite, chacun ayant une longueur de 2 à 10 m, de préférence de 3 à 6 m.

La présente invention a également pour objet un ensemble de deux conduites coaxiales comprenant une conduite interne et une conduite externe comprenant des complexes tubulaires unitaires selon l'invention, placés dans l'espace annulaire entre les deux dites conduites, ladite conduite interne, et de préférence ladite conduite externe, comprenant une dite conduite isolée selon l'invention.

Avantageusement, les dites conduites externe et interne sont reliées entre elles par des liens mécaniques centreurs comprenant de préférence des pièces en matériau plastique, de préférence encore en élastomère, pièces contre lesquelles viennent buter les dites extrémités de certains des dits complexes tubulaires.

Avantageusement encore, la pression dans l'espace entre les deux dites conduites, en dehors de l'enveloppe, est inférieure à 5 bars, de préférence identique à la pression atmosphérique.

Lesdits complexes tubulaires isolants sous vide ainsi réalisés sont enfilés les uns contre les autres pour constituer un ensemble présentant un minimum de ponts thermiques, lesdits ponts thermiques se situant au raccordement de deux complexes tubulaires isolants. Pour cela, les complexes tubulaires isolants selon l'invention sont de la longueur la plus longue possible, par exemple 6 m, la longueur étant en général limitée par les problèmes de manutention et les risques d'endommagement lors de l'assemblage de la conduite PIP.

Une autre limitation est engendrée par le comportement différentiel de la conduite interne par rapport à la conduite externe. En effet, lorsque la conduite interne se trouve en pression, elle a tendance à s'allonger en raison de l'effet de fond. De la même manière, la variation de température de ladite conduite interne augmente la longueur. Mais la conduite externe restant à la pression du fond de la mer et à la température du milieu ambiant, en général aux alentours de 4°C, il en résulte des efforts différentiels entre les deux conduites, ce qui implique l'installation desdits liens mécaniques espacés de manière régulière ou non et situés tout le long du PIP. L'espace entre deux dits liens mécaniques est calculé de manière à éviter que la contrainte de compression engendrée au sein de la paroi de la conduite interne, due au bridage de la conduite externe l'empêchant de s'allonger, ne conduise à une instabilité mécanique de la paroi de la conduite interne appelée "flambage". Selon les cas, cet espace peut être de 6 m dans les cas défavorables ou atteindre 15 à 20 m dans les cas de conduites internes de fort diamètre, par exemple 14" à 20". L'effet de fond et le flambage étant connus de l'homme de l'art dans le domaine des conduites pétrolières, ne seront pas développés dans les détails.

Ainsi, l'intervalle compris entre deux liens mécaniques successifs sera comblé par un ou plusieurs tubes isolants sous vide ajustés sur lesdits liens mécaniques et au niveau de la jonction de chacun des tubes entre eux, de manière à limiter les ponts thermiques au droit des jonctions successives.

Avantageusement, ledit lien mécanique sera constitué d'un matériau peu conducteur de la chaleur et réalisant un bon compromis entre performances mécaniques et performances d'isolation. A titre d'exemple, un tel lien mécanique peut être réalisé par une pièce moulée de type élastomère ou de type thermoplastique ou encore à partir de résines réticulées, chargées ou non.

Dans le cas de complexe isolant à structure tubulaire discontinue selon la seconde variante de réalisation de l'invention, un ensemble de deux conduites selon l'invention comprend de tels complexes isolants, disposés de préférence les uns à la suite des autres, dans ladite direction longitudinale XX' d'une part, et d'autre part disposés les uns dessus les autres de manière à ce qu'un complexe isolant supérieur recouvre le cas échéant les zones ouvertes constituées par les deux bords longitudinaux d'un même complexe rapprochés mais non raboutés l'un à l'autre desdits complexes isolants inférieurs et, le cas échéant, recouvre les zones ouvertes constituées par les bords d'extrémité de deux dits complexes inférieurs disposés côte à côte.

De préférence un complexe isolant supérieur (ou externe) est disposé de manière à chevaucher deux complexes isolants inférieurs (ou internes) consécutifs. Cette disposition permet d'éliminer les ponts thermiques au niveau des zones ouvertes longitudinales des complexes inférieurs ou internes, dans la mesure où ladite zone ouverte longitudinale du complexe isolant supérieur est décalée, de préférence de 180° par rapport à la zone ouverte correspondantes desdits complexes isolants inférieurs ou internes.

Dans le cas d'un complexe tubulaire isolant selon la première variante, son diamètre extérieur doit être supérieur de 1 à 2 cm au diamètre extérieur de la conduite intérieure pour que l'on puisse les insérer l'un dans l'autre. De même, le diamètre intérieur de la conduite externe doit être supérieur de 1 à 2 cm au diamètre extérieur du complexe tubulaire isolant selon la première variante, pour que l'on puisse les insérer l'un dans l'autre.

La seconde variante présente l'avantage de pouvoir fabriquer un complexe tubulaire isolant au diamètre extérieur exact de la conduite interne, ce qui permet de réduire d'autant le diamètre de la conduite extérieure, donc son poids et son coût. Par contre, cette seconde variante nécessite la fabrication de deux panneaux installés tête-bêche l'un sur l'autre pour éliminer les ponts thermiques au niveau des génératrices longitudinales, ce qui représente un surcoût significatif au niveau de la surface nécessaire de feuillard métallique qui se trouve ainsi quasiment doublé. Mais, dans le cas d'un produit fabriqué en usine puis transporté à plat vers le site d'assemblage où il est cintré autour de la conduite interne, il est simplement stocké à plat dans des containers qui peuvent être intégralement remplis, alors que les complexes tubulaires isolants selon la première variante doivent être stockés sur des supports empêchant leur ovalisation et leur endommagement, ce qui représente des volumes considérables, 5 à 10 fois supérieurs, donc de 5 à 10 fois plus de containers pour le transport. Ainsi, les deux alternatives présentent un intérêt propre et le choix de l'une ou de l'autre tiendra compte de multiples facteurs technico-économiques, comme explicité précédemment.

La présente invention a également pour objet un procédé de fabrication d'une conduite isolée ou d'un ensemble de deux conduites coaxiales selon l'invention, caractérisé en ce que :
- on préforme un complexe tubulaire fermé selon ladite première variante de réalisation desdits complexes selon l'invention, et
- on enfile ledit complexe tubulaire autour d'une dite conduite ou respectivement dans l'espace annulaire interne d'un ensemble de deux conduites coaxiales.

La présente invention a également pour objet un procédé de fabrication d'une conduite isolée ou d'un ensemble de deux conduites coaxiales selon l'invention, caractérisé en ce que :
- on réalise un complexe isolant en position développée plane selon ladite seconde variante de réalisation de l'invention, et
- on forme un complexe isolant par cintrage ou enroulement dudit complexe sur une dite conduite, le cas échéant, la conduite interne d'un ensemble de deux conduites coaxiales selon l'invention.

La présente invention a également pour objet un procédé de fabrication d'un complexe isolant selon l'invention, caractérisé en ce que :
1) on applique ledit matériau isolant sur un premier feuillard métallique constitutif de ladite paroi interne, lui-même appliqué sur un mandrin tubulaire ou une surface plane, puis
2) on recouvre ledit matériau isolant avec un deuxième feuillard métallique ondulé constitutif de ladite paroi externe de l'enveloppe, puis
3) on réalise lesdites extrémités opposées dudit complexe en scellant lesdits bords d'extrémité respectifs desdites parois externe et interne.

D'autres caractéristiques et avantages de la présente invention apparaîtront à la lumière de la description détaillée qui va suivre, en référence aux figures suivantes dans lesquelles : .
- La figure 1 est une coupe longitudinale axiale d'un PIP comportant un complexe tubulaire isolant sous vide situé entre une conduite interne et une conduite externe,
- La figure 2 est une coupe longitudinale axiale d'un complexe tubulaire isolant sous vide selon l'invention détaillant un mode de formage de tulipes aux extrémités circulaires opposées de l'enveloppe,
- La figure 3 est une coupe longitudinale axiale d'un complexe tubulaire isolant sous vide selon l'invention détaillant un mode de réalisation des extrémités de raccordement des parois interne et externe de l'enveloppe,
- La figure 4 est la vue de côté d'une paroi externe de l'enveloppe comportant sur une partie de sa longueur des ondulations transversales réparties en plusieurs zones de la circonférence de ladite enveloppe,
- Les figures 5A-5B sont des sections relatives au plan AA de la figure 4, de la paroi externe, respectivement en configuration circulaire (5A) et en configuration développée plane (5B),
- Les figures 6A-6B et 7A-7B sont des sections relatives au plan BB de la figure 4, de la paroi externe ondulée, respectivement en configuration circulaire (6A-7A) et en configuration développée plane (6B-7B), respectivement avant tirage au vide (6A-6B) et après tirage au vide (7A-7B),
- La figure 8 représente la développée plane de la paroi externe de l'enveloppe et les figures 8A et 8B représentent les sections relatives aux plans AA et BB de la figure 8,
- La figure 9 représente en vue de coupe de côté, un mode de réalisation de la jonction étanche entre les parois interne et externe, par déformation de l'enveloppe interne par expansion pour atteindre le diamètre de l'enveloppe externe,
- Les figures 10A à 10F, représentent en coupe en vue de côté, un mode préféré de fabrication d'une extrémité de l'enveloppe dans la direction longitudinale comprenant une pièce rapportée 10 permettant de réaliser la jonction étanche entre les parois interne et externe,
- La figure 10G représente en coupe en vue de côté, un autre mode de réalisation d'une dite pièce rapportée 10,
- La figure 11 est la vue en coupe transversale d'un complexe isolant du type panneau plan c'est-à-dire comprenant un matériau isolant en forme de panneau plan et dont l'enveloppe présente des ondulations (9) sur sa paroi externe,
- La figure 12 représente la vue en coupe transversale du complexe isolant de la figure 11, mais après cintrage pour obtenir une forme circulaire ouverte dans sa partie basse,

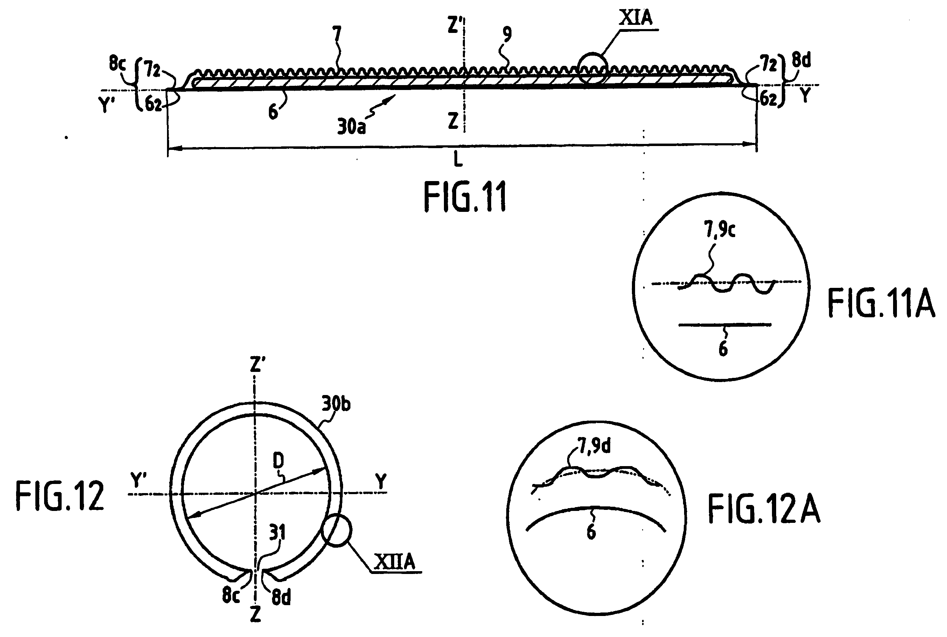

- Les figures 11A et 12A sont des sections relatives aux figures 11 et 12 détaillant la déformation des ondulations de la paroi externe ondulée, lors du passage de la configuration plane de la figure 11, à la configuration cintrée de la figure 12, la paroi interne passant d'une configuration plane à une configuration sensiblement circulaire,

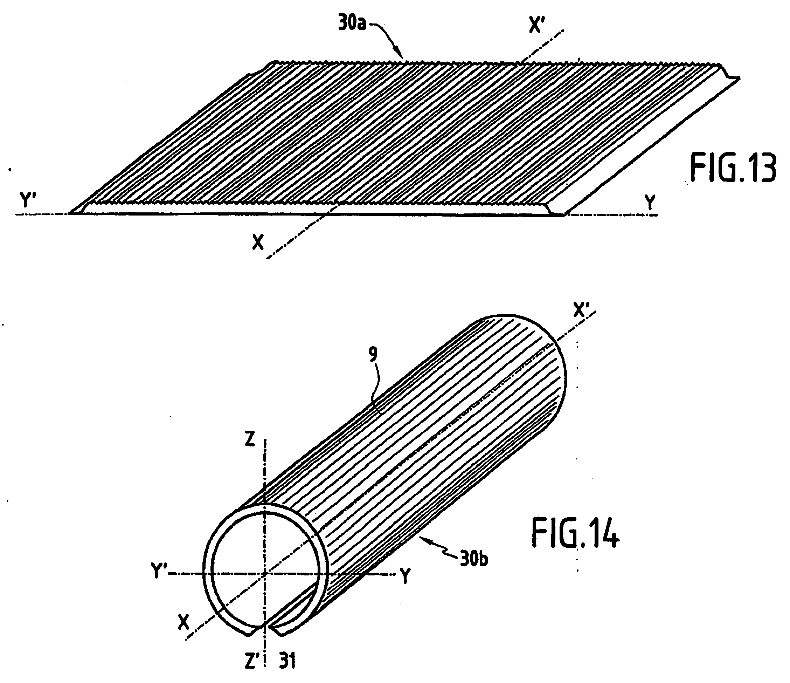

- Les figures 13 et 14 sont des vues en perspective d'un complexe isolant du type panneau plan à enveloppe ondulée, respectivement en configuration plane (figure 13) et en configuration sensiblement circulaire après cintrage (figure 14),

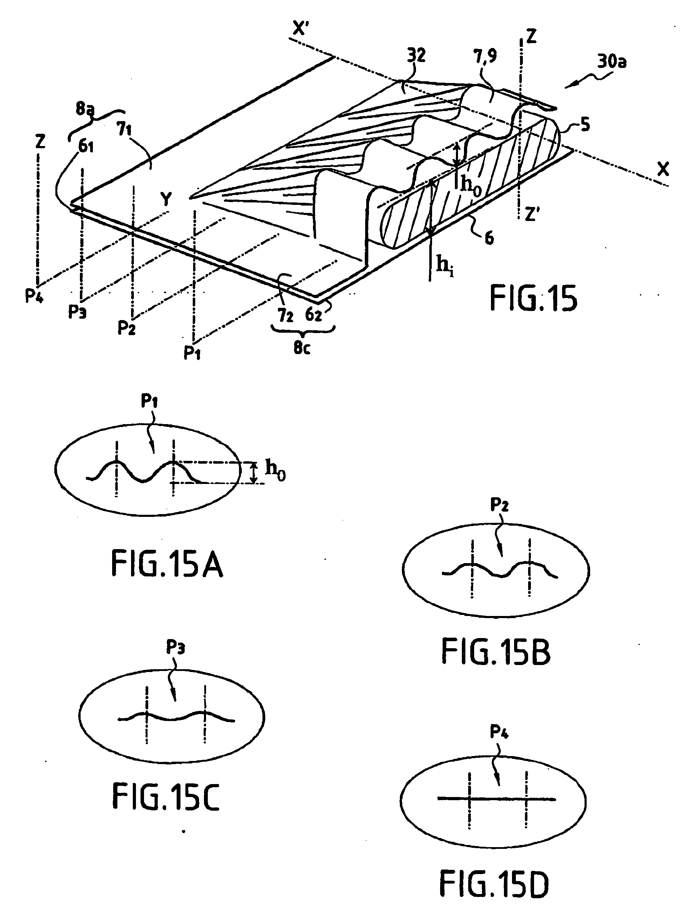

- La figure 15 est une vue en perspective d'un complexe isolant du type panneau plan des figures 11 et 13 détaillant la zone de transition entre la paroi supérieure ondulée, ou extrados, et la paroi inférieure plane, ou intrados, dudit panneau plan,
- Les figures 15A - 15D sont des sections transversales selon les plans respectifs P1, P2, P3 et P4 , de la paroi externe ondulée dudit panneau plan de la figure 15,

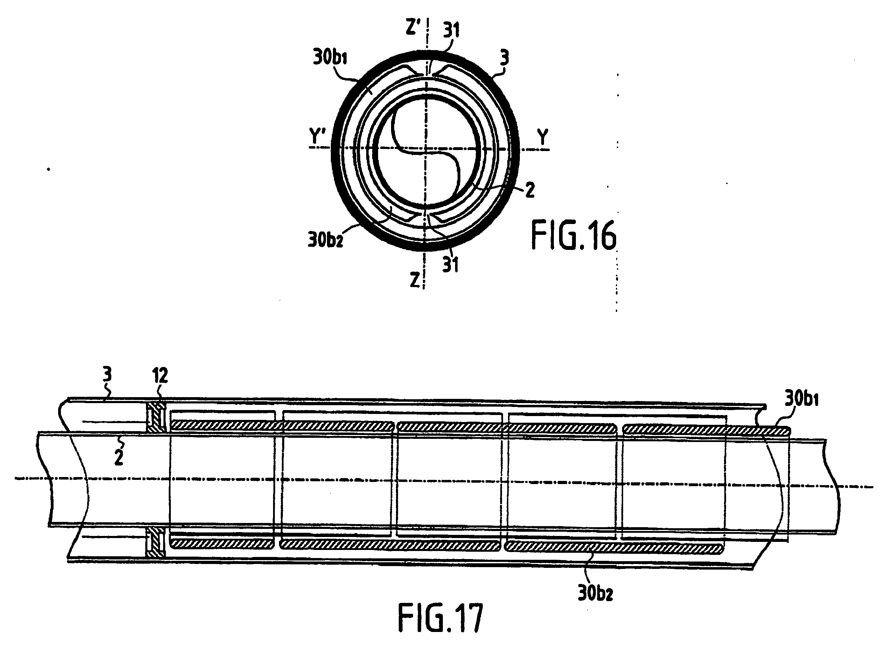

- La figure 16 est une section d'un PiP constitué de deux panneaux cintrés en configuration circulaire selon la figure 14, installés tête-bêche entre une conduite interne et une conduite externe,
- La figure 17 et la section dans la direction longitudinale selon le plan (ZZ', XX') correspondant à la figure 16, détaillant les deux couches de panneaux circulaires installés tête bêche et présentant un décalage longitudinal.

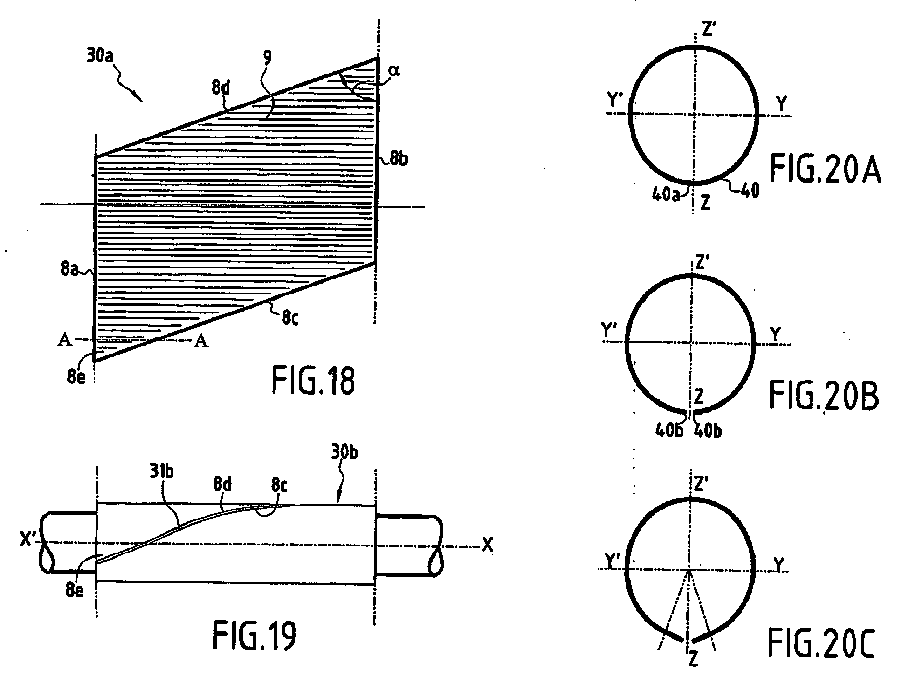

- La figure 18 est une vue en plan d'un panneau plan en forme de parallélogramme,
- La figure 19 est la vue de côté d'une conduite interne autour de laquelle on a cintré (enroulé sur un tour) le panneau plan parallélogramme de la figure 18,
- Les figures 20A et 20B représentent les diverses phases de réalisation d'un tube à partir d'une feuille plane cintrée, le tube étant préparé avec croquage sur la figure 20B pour donner après soudure longitudinale la forme 20A,
- La figure 20C représente la préparation d'un tube sans croquage, avant soudure longitudinale.

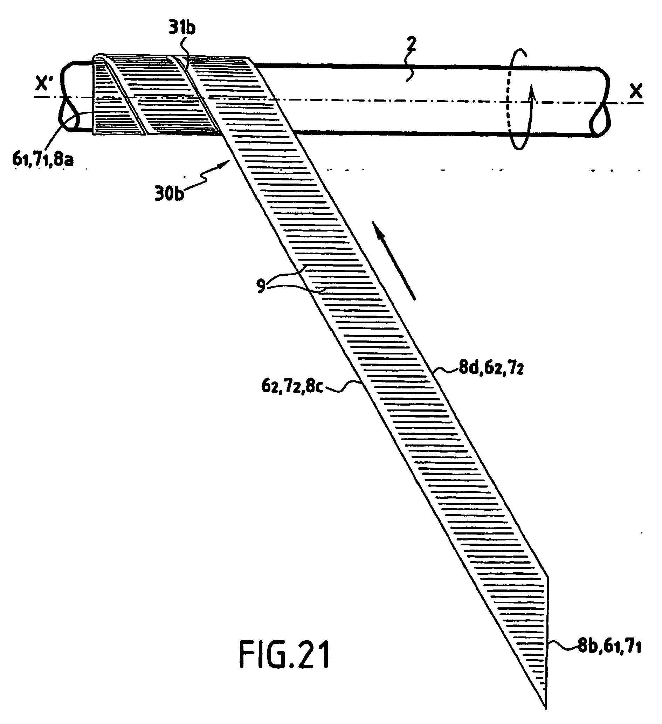

- La figure 21 est la vue de côté d'une conduite interne autour de laquelle on a enroulé sur plusieurs tours un panneau plan parallélogramme selon l'invention, constitué donc d'une bande enroulée en spirale.

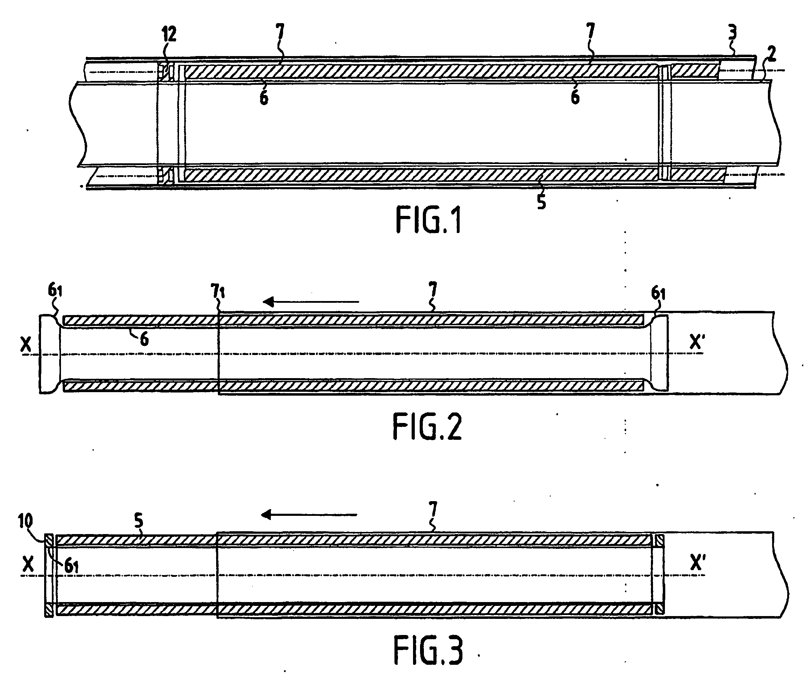

Sur les figures 1 à 10, on a représenté un premier mode de réalisation de l'invention dans lequel on réalise un complexe tubulaire fermé isolant selon l'invention, et on enfile ledit complexe tubulaire autour d'une conduite ou, le cas échéant, dans l'espace annulaire interne entre deux conduites d'un ensemble de deux conduites co-axiales.

La figure 1 est une coupe longitudinale axiale d'un PIP comportant une conduite interne 2 maintenue coaxiale à une conduite externe 3 par l'intermédiaire de liens mécaniques 12 espacées de manière régulière ou non, un complexe tubulaire isolant sous vide 1 étant situé entre les deux conduites 2, 3.

Le complexe tubulaire 1 comprend :
- une enveloppe 4 et un matériau isolant 5 confiné entre la paroi interne 6 et la paroi externe 7 de la dite enveloppe 4,
- chacune des dites parois 6, 7 étant constituée d'une feuille métallique, de préférence en acier inoxydable ou en aluminium, de préférence encore en invar, d'épaisseur de 0.05 à 0.5mm, assurant la rigidité mécanique du complexe tubulaire isolant et jouant le rôle de barrière moléculaire contre la migration de gaz,
- le matériau isolant tubulaire 5 est réalisé en matériau isolant rigide tel que mousse de polyuréthane à cellules ouvertes ou autre, en matériau non rigide poreux tel une nappe de fibres de verre, ou fibres de céramique, ou matériau nano-poreux ou encore d'aérogel
- le complexe tubulaire isolant est tiré au vide comme il sera expliqué plus loin.

L'utilisation d'invar, acier à base de nickel présentant un coefficient de dilatation quasiment nul, pour réaliser les enveloppes, est particulièrement intéressant, car il permet de minimiser les effets de dilatation différentielle entre la paroi externe qui se trouve à la température du fond de la mer, c'est-à-dire à 4-5°C, et la paroi interne qui se trouve à la température du fluide transporté, ladite température pouvant dépasser 200°C. En effet ces dilatations différentielles créent des contraintes très importantes au niveau des extrémités des enveloppes tubulaires, pouvant engendrer des phénomènes de rupture ou de fatigue durant les cycles de réchauffement et de refroidissement, pendant la durée de vie des installations qui dépasse 20 ans.

Sur les figures 2 et 3, on a représenté en coupe longitudinale, des modes de fabrication d'un complexe tubulaire isolant, avec le matériau isolant 5 de forme tubulaire entourant la paroi interne 6, la paroi externe 7 étant enfilée de la droite vers la gauche. L'étanchéité des extrémités dudit complexe tubulaire isolant dans la direction longitudinale 8A, 8B est, dans la figure 2 constituée par un évasement des bords d'extrémité dans la direction longitudinale XX' 6₁ de la paroi interne 6, obtenu par emboutissage ou hydroformage, de manière à ce que le diamètre extérieur de ladite paroi interne corresponde avec précision au diamètre intérieur de ladite paroi externe 7. Ceci permet de réaliser une fermeture parfaitement étanche par une simple soudure réalisée soit par le procédé TIG, connu de l'homme de l'art dans le domaine du soudage, par soudage laser, ou par tout type de soudure, ou encore par collage des bords d'extrémité 6₁, 7₁ des parois interne et externe.

Dans la figure 3, une pièce cylindrique rapportée 10 est soudée d'une part à la paroi cylindrique 6 interne en 6₁ et à la paroi cylindrique externe en 7₁ lorsque celle-ci a été enfilée par dessus le matériau isolant.

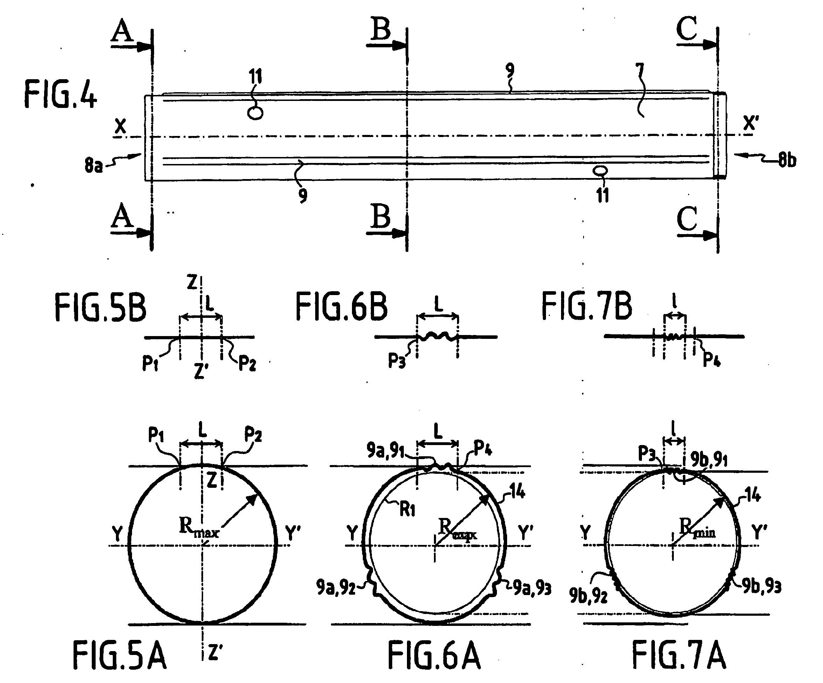

La figure 4 représente la paroi cylindrique externe 7 d'un complexe tubulaire isolant constituée d'un feuillard métallique présentant sur une partie de sa longueur des ondulations 9 créées par emboutissage, ainsi que des orifices 11, circulaires ou non, servant à tirer au vide le complexe tubulaire isolant avant fermeture définitive desdits orifices par des opercules, non représentées, rapportés et soudés, par exemple par un laser de puissance, ou encore collées.

Les figures 5A-5B représentent une section de la paroi externe 7 correspondant au plan AA de la figure 4, montrant une configuration de section circulaire de l'extrémité de la paroi externe 7 de rayon Rₘₐₓ légèrement supérieure au diamètre extérieur de l'isolant ainsi qu'au diamètre externe du dispositif de raccordement avec la paroi interne tel qu'explicité précédemment dans les figures 2 et 3.

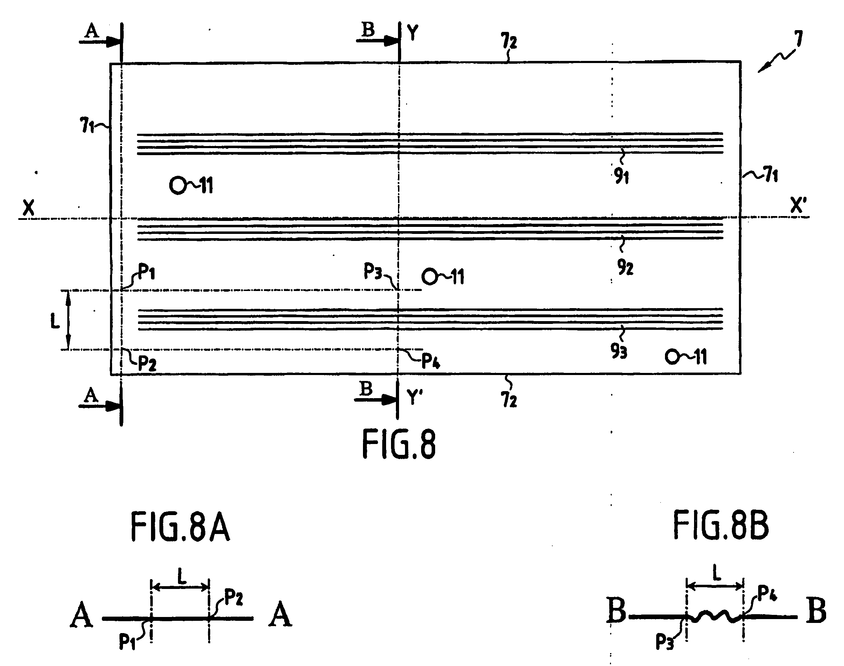

Les figures 6A-6B représentent une section de la paroi externe 7 correspondant au plan BB de la figure 4, montrant une configuration sensiblement circulaire de rayon Rₘₐₓ et présentant trois séries 9₁, 9₂, 9₃ d'ondulations 9 décalées de 120°. Ces ondulations sont obtenues par emboutissage du feuillard à plat avant son enroulage pour former un cylindre sensiblement circulaire et avant réalisation de la soudure longitudinale selon l'axe XX' pour rabouter les génératrices, tel qu'explicité sur la figure 8.

Sur la figure 5B, on a représenté la développée plane de la paroi externe 7 de l'enveloppe 4 sur laquelle on a tracé deux points de référence P₁ et P₂ distants d'une longueur L. Ces points P₁ et P₂ sont repérés aussi sur la forme circulaire de la figure 5A.

Sur la figure 6B on a représenté la développée plane de la paroi externe 7 sur laquelle on a tracé deux points de référence P₃ et P₄ distants d'une longueur L. Ces points P₃ et P₄ sont repérés aussi sur la forme circulaire de la figure 5A.

L'emboutissage décrit sur la figure 8 crée sur la dite portion de largeur L un étirement dans la direction transversale YY' de la matière qui se matérialise par une surlongueur δI de la développée par rapport à la distance L entre les points de référence P₃ et P₄, et donne à la paroi une flexibilité qui est expliquée ci-après en regard des figures 7A-7B.

Pour la clarté des explications, sur les figures 6A et 7A, seule la paroi externe 7 de l'enveloppe a été représentée, le diamètre extérieur de l'isolant 5 étant matérialisé par le cercle 5A, et la paroi interne 6 n'est pas représentée.

La figure 6A représente la paroi externe 7 de l'enveloppe du complexe tubulaire isolant au repos, à la pression atmosphérique, après assemblage et soudage des divers composants, prête à être tiré au vide. Le jeu existant entre l'enveloppe externe 4 de rayon intérieur Rₘₐₓ et l'isolant 5 de rayon extérieur R₁ permet l'assemblage des divers composants par coulissement longitudinal de la paroi externe 7 de l'enveloppe 4 tel qu'explicité dans les figures 2 et 3.

Lors du tirage au vide du complexe tubulaire isolant 1 par les orifices 11, la paroi interne 6, non représentée, aura tendance à augmenter de diamètre de manière non significative dans la limite des capacités d'étirement du matériau et restera sensiblement circulaire. Par contre, la paroi externe 7 aura tendance à s'effondrer sur elle-même et à diminuer de diamètre jusqu'à venir en appui sur le matériau isolant tel qu'explicité sur la figure 7A-7B. A cet effet, les portions circulaires 14 se comporteront comme des voûtes et resteront sensiblement circulaires avec un rayon de courbure se réduisant de Rₘₐₓ à Rₘᵢₙ, jusqu'à venir en appui sur ledit matériau isolant 5, alors que les portions ondulées 9₁, 9₂, 9₃, initialement en configuration expansée 9a sur la figure 6A-6B, évolueront lors du tirage au vide vers une configuration resserrée et ramassée 9b comme explicité sur les figures 7A-7B.

Le resserrement des ondulations 9₁, 9₂, 9₃ permet ainsi d'absorber la différence de longueur développée de la paroi externe 7 de cercle de base Rₘₐₓ avant tirage au vide, et Rₘᵢₙ après tirage au vide.

Ainsi, au niveau des extrémités 8a, 8b du complexe 1 dans la direction longitudinal XX', la distance entre les points de référence P₁ et P₂ n'évolue pas au cours du tirage au vide, alors que la distance entre les points de référence P₃ et P₄ passe de la valeur L avant tirage au vide, à la valeur I après tirage au vide, et dans le cas de trois séries 9₁, 9₂, 9₃ d'ondulations, on a alors : δL ≈ 3 x (L-l)δL correspondant alors sensiblement à la réduction de la circonférence lorsqu'elle passe du rayon Rₘₐₓ avant tirage au vide, au rayon Rₘᵢₙ après tirage au vide.

Ainsi, la souplesse apportée par les ondulations 9 permet à la structure de la paroi externe 7 de l'enveloppe de garder une configuration sensiblement circulaire lors du tirage au vide, évitant ainsi la création d'enfoncements localisés ou cabossages, lesdits cabossages risquant d'interférer avec l'intérieur de la conduite externe 3 lors des opérations de fabrication ou d'installation, ce qui représente un risque pour l'intégrité du système d'isolation du PiP.

Sur les figures 8A et 8B, on a représenté la paroi externe 7 de l'enveloppe 4 en cours de fabrication, après emboutissage et avant roulage pour obtenir la forme circulaire décrite sur les figures 4, 5, 6 et 7. On a représenté les mêmes points de référence P₁ et P₂, P₃ et P₄ espacés d'une distance L, et relatifs au feuillard métallique respectivement dans la zone proche des extrémités 8a, 8b du complexe 1 (plan AA fig.8A), et dans la zone 9₁, 9₂, 9₃ des ondulations (plan BB fig.8B).

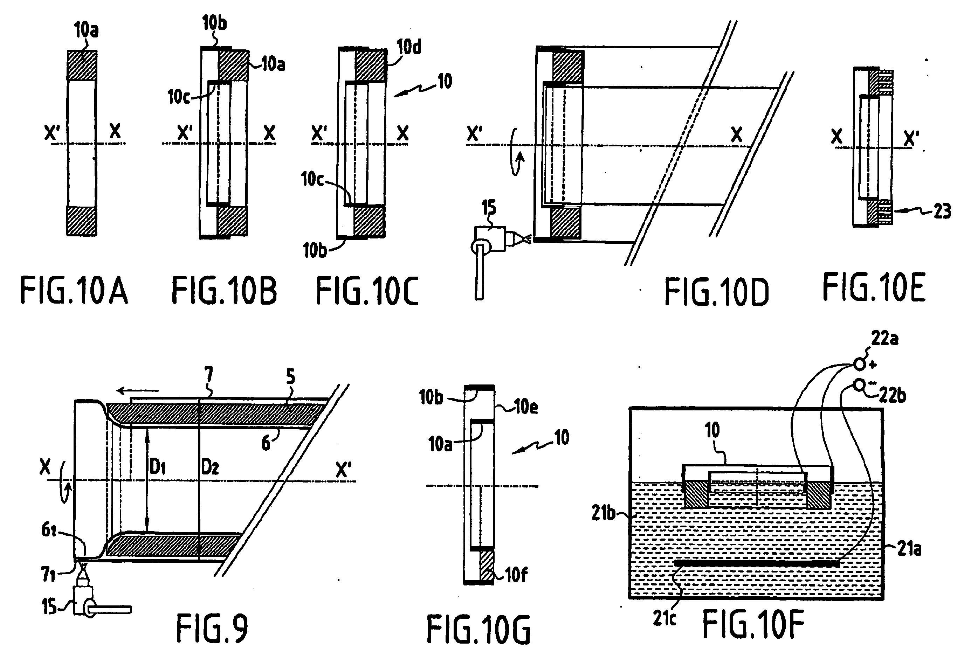

Sur la figure 9 on a représenté en coupe en vue de côté, l'extrémité d'un complexe tubulaire isolant selon la figure 2, dans lequel on détaille le mode de raccordement de la paroi intérieure 6 et de la paroi externe 7. Le diamètre dudit bord d'extrémité 6₁ de la paroi interne 6 est expansée sur une longueur de quelques centimètres, par exemple 1 à 2 cm, de manière à ce que le diamètre initial extérieur de ladite paroi interne 6 passe du diamètre D1 au diamètre D2 correspondant sensiblement au diamètre intérieur de ladite paroi externe 7. Cette expansion est avantageusement réalisée à l'aide d'un mandrin radialement expansible, ou par hydroformage en utilisant de l'eau sous pression, selon des procédés connus de l'homme de l'art.

Dans la partie supérieure de la figure 9, la paroi externe 7 est en cours d'insertion sur le matériau isolant 5, dans la partie inférieure de la figure 9, l'extrémité 7₁ de ladite paroi externe 7 est directement soudée à l'extrémité 6₁ de la paroi interne 6 au moyen d'une torche laser 15 ou d'un chalumeau à plasma, la torche étant fixe et le complexe tubulaire isolant 1 étant mis en rotation autour de son axe XX.

Pour minimiser les ponts thermiques entre paroi externe 7 et la paroi interne 6 au niveau des extrémités longitudinales 6₁, 7₁, sur les figures 10A-10D, on a représenté en coupe en vue de côté, une version préférée de l'extrémité d'un complexe tubulaire isolant selon l'invention, relative à la figure 3 dans laquelle le raccordement entre la paroi interne 6 et la paroi externe 7 est réalisée par une pièce intermédiaire de révolution 10 comportant un corps principal 10a en matériau isolant présentant une bonne résistance mécanique, par exemple en matériau composite ou en mousse syntactique, sur lequel on solidarise, par exemple par collage, une première virole métallique extérieure 10b et une seconde virole métallique intérieure 10c dépassant sur la gauche comme représenté sur la figure 10B. Ces deux viroles sont en métal compatible avec les parois interne et externe de l'enveloppe, de manière à être soudé en phase finale d'assemblage dudit complexe tubulaire isolant, par exemple à l'aide d'une torche laser 15 ou d'un chalumeau plasma, la torche étant fixe et le complexe tubulaire isolant étant mis en rotation autour de son axe XX', comme représenté sur la figure 10D.

Les matériaux composites et les mousses syntactiques étant sujettes à migration de molécules gazeuses, on réalise avantageusement un dépôt électrolytique 10d d'un métal, par exemple du nickel pur, compatible avec le métal de base desdites viroles 10b et 10c, tel que représenté sur la figure 10C.

La figure 10F montre le processus de dépôt électrolytique obtenu par galvanoplastie dans un bac 21 a contenant l'électrolyte 21b, la pièce intermédiaire de révolution 10 étant suspendue à la surface du liquide de manière à ce que seule la face inférieure et les faces latérales du corps principal 10a, ainsi que la partie inférieure des viroles 10b et 10c, soient mouillées par l'électrolyte 21 b. L'anode 21c, par exemple en nickel pur, fournit les ions métal qui seront déposés grâce à un courant électrique continu appliqué aux bornes positives et négatives 22a et 22b, sur le corps principal, préalablement recouvert d'un couche conductrice non représentée, par exemple d'un vernis conducteur à base de particules de carbone, ou de particules métalliques, connu de l'homme de l'art. Lorsque la couche électrolytique 20d atteint une épaisseur suffisante, par exemple quelques dizaines de microns, voire quelques centaines de microns, la surface de l'ensemble viroles 10b-10c associé au dépôt électrolytique 10dD crée une barrière moléculaire continue, ce qui permet au complexe tubulaire isolant de présenter une étanchéité absolue après soudure circulaire des extrémités telle que décrite précédemment sur la figure 10D. De plus, le pont thermique est considérablement réduit, car l'épaisseur de métal déposée est très faible en comparaison de l'épaisseur des parois interne 6 et externe 7. Pour diminuer ledit pont thermique, la face sur laquelle sera effectué le dépôt électrolytique sera avantageusement rendue sinueuse 23 pour augmenter la longueur de transfert des calories et réduire ainsi le gradient de température entre la paroi interne 6 et la paroi externe 7, comme représenté sur la figure 10F.

Sur la figure 10G, on a représenté une variante de réalisation de la pièce 10 assurant la jonction de l'extrémité d'un complexe tubulaire isolant selon l'invention. Cette pièce est réalisée par emboutissage pour former les viroles externe 10b et interne 10c réunies par un fond annulaire mince 10e. La paroi de fond annulaire mince 10e est amincie par emboutissage de manière connue de l'homme de l'art, pour minimiser le pont thermique d'extrémité du complexe tubulaire isolant. La pièce ainsi réalisée présente avantageusement une épaisseur de virole 10b-10c de l'ordre du mm et une épaisseur de la paroi amincie 10e de 0,05 à 0,2mm. Une telle pièce d'extrémité reste plus fragile que la pièce 10a-10dD décrite précédemment, mais sa fabrication est plus simple, donc moins coûteuse. On renforce avantageusement la pièce d'extrémité de la figure 10G en coulant, après emboutissage et avant soudage, un matériau de type époxy ou en mousse syntactique 10f, adhérant correctement aux parois, pour obtenir une forme similaire à celle représentée sur la figure 10C.

Dans le premier mode de réalisation des figures 1 à 10, chacune desdites parois interne et externe est obtenue à partir d'un feuillard métallique dont les deux dits bords d'extrémité opposés parallèles dans la direction longitudinale XX', 6₁ pour la paroi interne et 7₁ pour la paroi externe, et les deux autres bords longitudinaux opposés parallèles 6₂ pour la paroi interne et 7₂ pour la paroi externe, forment pour chaque paroi un rectangle, les deux dits'bords longitudinaux opposés parallèles 6₂ et 7₂ de chaque dite paroi étant raboutés l'un sur l'autre, de préférence par scellage ou soudage, pour former ensuite un dit complexe isolant tubulaire.

Plus précisément, la face tournée vers l'intérieur de l'enveloppe d'un desdits bords longitudinaux 6₂ ou 7₂ de chaque paroi est raboutée sur la face tournée vers l'extérieur de l'enveloppe de l'autre dit bord longitudinal opposé 6₂ ou respectivement 7₂ de ladite paroi.

Selon un second mode de réalisation de l'invention illustré sur les figures 11 et suivantes, on réalise un complexe isolant à partir de panneaux plans, puis on forme par cintrage un complexe isolant à structure tubulaire ouverte et donc discontinue autour d'une conduite.

Dans cette seconde variante de réalisation, le complexe isolant est apte à adopter une position sensiblement plane 30a, ladite enveloppe étant formée à partir de dites parois interne et externe de forme rectangulaire ou parallélogramme dont les deux bords longitudinaux opposés parallèles 6₂ ou 7₂ de chacune desdites parois interne et externe ne sont pas raboutés l'un sur l'autre, et sont aptes à être rapprochés lorsque ledit complexe est cintré et mis en place autour de ladite conduite pour former une structure tubulaire 30b d'axe longitudinal XX' présentant une discontinuité périphérique 31a, 31b en section transversale.

Sur les figures 11 et 20C, on a représenté en coupe transversale et en vue de face, la seconde variante de réalisation de l'invention dans laquelle le complexe isolant 1 est réalisé à partir d'un panneau plan 30a que l'on cintre pour obtenir une forme sensiblement tubulaire 30b présentant une discontinuité longitudinale 31 délimités par les côtés longitudinaux opposés 8c et 8d dudit panneau plan 30a. Le panneau plan comprend une paroi interne 6, ou intrados, constituée d'un feuillard métallique plan et d'une paroi externe 7, ou extrados, constituée d'un feuillard métallique caractérisé en ce que ledit feuillard présente des ondulations longitudinales parallèles à l'axe longitudinal XX. Ainsi, lors du cintrage du panneau plan tel que représenté sur la figure 12, réalisé de préférence sur un mandrin de diamètre D, l'intrados 6 prend une forme circulaire sensiblement conforme au mandrin, tandis que l'extrados ondulé 7, se courbe pour former dans sa partie circulaire aux extrémités 8a et 8b du complexe, un cercle sensiblement de diamètre D+2e, e étant sensiblement l'épaisseur du matériau d'isolation avant cintrage.

La circonférence de l'intrados 6 représente sensiblement la longueur C=π D, c'est-à-dire la largeur L du panneau plan de la figure 11, tandis que la longueur de la circonférence de l'extrados 7 représente sensiblement la longueur C= π(D+2e).

La surlongueur nécessaire pour que le cintrage s'effectue dans de bonnes conditions correspond alors sensiblement à δC= 2πe, ladite surlongueur étant fournie par la déformation des ondulations qui passent d'un état ramassé 9c lorsque le panneau est plan comme détaillé sur la figure 11A, à un état distendu 9d lorsque le panneau est cintré au diamètre D, comme détaillé sur la figure 12A. Ainsi, lors du cintrage d'un panneau plan pour obtenir une forme sensiblement circulaire, les intrados 6 et extrados 7 ne subiront que des efforts de flexion, limitant ainsi les risques de rupture desdits intrados 6 et extrados 7 ou l'écrasement du matériau isolant, lors du formage et durant toute la durée de vie du complexe tubulaire isolant 1 qui peut atteindre et dépasser 20 ans, voire 30 ans ou plus.

Sur les figures 13 et 14 on a représenté en perspective le complexe du type panneau plan en configuration plane 30a avant cintrage et en configuration tubulaire après cintrage en 30b.

Sur la figure 15 on a représenté en perspective, la jonction des parois de l'enveloppe d'un complexe du type panneau plan 30a correspondant à la figure 13 détaillant la zone de transition 32 entre l'intrados 6 et l'extrados onduleux 7.

La figure 15A correspond à la coupe de la figure 15 selon le plan P1, détaillant une ondulation d'amplitude h₀ obtenu lors de l'emboutissage de la paroi externe 7 visant à créer un espace de hauteur hᵢ servant à recevoir le matériau isolant 5. Dans la zone de transition 32, la hauteur des ondulation décroît progressivement, de préférence de manière linéaire, comme représenté sur les figures 15B et 15C correspondant respectivement aux coupes de la figure 15 selon les plans P2 et P3, l'ondulation selon P3 étant moins prononcée que l'ondulation selon P2, cette dernière étant d'amplitude inférieure à h₀.

La figure 15D correspond à la coupe de la figure 15 selon le plan P4 et au delà, l'extrados 7 ne présentant alors plus d'ondulation. Il est en contact direct avec l'intrados 6, prêt à être soudé sur leur périphérie le long de leurs bords longitudinaux 6₂, 7₂ du côté des bords longitudinaux 8c du complexe et bords d'extrémité 6₁, 7₁ du côté des extrémités 8a, 8b dans la direction longitudinale du complexe au moyen, par exemple, d'une torche laser 15 ou d'une torche plasma.

Sur la figure 16 on a représenté en section longitudinale, un PiP composé d'une conduite interne 2, d'une conduite externe 3, et comportant des complexes tubulaires isolants superposés 30b₁ et 30b₂, de type plan roulé tel que décrits précédemment sur les figures 13 et 14, lesdits complexes tubulaires isolants étant installés l'un au dessus de l'autre, tête-bêche, c'est-à-dire que leur génératrice longitudinale ouverte 31 est décalée de 180°, et chaque complexe isolant supérieur 30b₂ chevauche deux complexes isolants inférieurs 30b₁.

La figure 17 est une coupe axiale longitudinale détaillant le décalage longitudinal des complexes tubulaires isolants externes 30b₂ par rapport aux complexes tubulaires isolants internes 30b₁ de manière à minimiser les ponts thermiques entre la conduite interne 2 et la conduite interne externe 3.

Dans un mode de réalisation de cette seconde variante, lesdits parois interne et externe sont de forme rectangulaire lorsque ledit complexe est en position plane 30a, et après cintrage dudit complexe autour d'une dite conduite, ledit complexe forme une dite structure tubulaire ouverte 30b présentant une discontinuité le long d'une génératrice 31a dans ladite direction longitudinale XX', et lesdites extrémités opposées 8a, 8b dans ladite direction longitudinale dudit complexe formées par les bords respectifs desdites parois interne et externe, forment une surface cylindrique ouverte le long d'une dite génératrice 31a dans ladite direction longitudinale XX', surface cylindrique de diamètre sensiblement identique au diamètre interne du matériau isolant de forme substantiellement tubulaire confiné dans ladite enveloppe.

Dans un autre mode de réalisation de cette seconde variante, les bords d'extrémité 6₁, 7₁ et bords longitudinaux 6₂, 7₂ desdites parois interne et externe définissent un parallélogramme comprenant un angle de préférence de 15 à 60° lorsque ledit complexe est en dite position plane, ledit parallélogramme étant apte à être enroulé autour d'une dite conduite pour former une dite structure tubulaire présentant une discontinuité le long d'une courbe hélicoïdale 31 b formée par l'espace entre lesdits bords longitudinaux 8c, 8d dudit complexe, non raboutés l'un à l'autre après cintrage dudit complexe.

Les figures 18 et 19 représentent un complexe tubulaire isolant de ce dernier type obtenu à partir d'un panneau plan roulé, ledit panneau plan 30a étant un parallélogramme, avec sommet d'angle aigu α=60°. Les ondulations 9 restent parallèles à l'axe XX' de la conduite et sont donc perpendiculaires aux arêtes des extrémités 8a, 8b et présentent donc la même incidence α avec les côtés opposés longitudinaux 8c et 8d.

Cette version de l'invention présente un avantage considérable qui est développé ci-après en regard des figures 20A, 20B et 20C qui expliquent les différentes phases de fabrication d'un élément tubulaire à partir de cet élément plan.

La figure 20A représente une conduite tubulaire en acier 40 réalisée à partir d'une tôle roulée, ladite tôle roulée étant soudée longitudinalement en 40a. Lors du processus de roulage, et avant soudure, il est nécessaire d'obtenir la forme circulaire quasi parfaite de la figure 20B, dans laquelle le rayon de courbure r est quasiment constant sur toute la périphérie et jusqu'aux deux arêtes 40b. Ceci est mécaniquement très délicat à obtenir et est réalisé habituellement sur les rouleuses du commerce grâce à une opération connu de l'homme de l'art, appelée « croquage » et qui consiste en un pré-pliage au niveau des arêtes longitudinales 40b visant à lui conférer une courbure proche de la courbure recherchée, le roulage étant ensuite réalisé de manière conventionnelle. La figure 20C représente une conduite tubulaire en acier qui a été roulée sans ladite opération de « croquage » et qui présente dans la zone proche des arêtes longitudinales 40b, une portion quasiment rectiligne, c'est-à-dire de rayon infini. Il en résulte alors une excroissance qui est en général inacceptable sur un produit tubulaire.

Lors du cintrage d'un panneau plan pour obtenir un complexe tubulaire isolant, on cherche à éviter la configuration représentée sur la figure 20C, car l'excroissance engendrée risque d'interférer avec l'intérieur de la conduite externe 3 du PiP, et d'être endommagé lors de son insertion à l'intérieur de ladite conduite externe. Le préformage par croquage d'un tel panneau plan est très délicat car il y a risque d'écrasement complet de la structure isolante qui reste assez fragile malgré son enveloppe métallique. Dans le cas d'un panneau plan rectangulaire, en l'absence de croquage, il serait cependant possible de forcer les bords longitudinaux 8c, 8d à rester en contact avec l'extérieur de la conduite interne en solidarisant lesdits bords à ladite conduite, par exemple par collage ou à l'aide de rubans adhésifs. Mais, il conviendrait alors qu'un desdits bords longitudinaux 8c, 8d soit intégralement et très fermement maintenu non seulement pendant la phase d'enroulage, puis pendant toute la durée de préfabrication et d'installation du PiP. Il en va de même de l'autre bord qui, en fin de roulage, doit être maintenu parfaitement de la même manière.

En enroulant un panneau en forme de parallélogramme présentant un angle aigu α, tel que représenté sur les figures 18 et 19, la phase initiale de roulage consiste à solidariser la pointe 8e dudit parallélogramme sur la paroi externe de la conduite. Cette pointe représente une très faible surface car elle peut être limitée au triangle compris entre ladite pointe proprement dite et le plan AA, soit par exemple une hauteur de 5 à 10 cm. Puis, lors de l'enroulement, le côté 8c du parallélogramme prend naturellement la forme circulaire et présente un rayon de courbure sensiblement constant jusqu'à ce que la seconde pointe 8e dudit parallélogramme soit appliquée et maintenue en position contre ladite conduite interne, par exemple par collage ou à l'aide de ruban adhésif.

Dans le cas de deux panneaux plans en forme de parallélogramme roulés l'un au dessus de l'autre, on prendra soin de décaler lesdites pointes radialement et d'une demi longueur de panneau longitudinalement, pour minimiser les ponts thermiques, comme il a été expliqué sur précédemment sur les figures 16 et 17 pour que la zone de jonction discontinue entre les bords longitudinaux 8c et 8d d'un premier complexe soit recouverte par la partie pleine ou continue centrale d'un second complexe superposé.

Dans un autre mode de réalisation de l'invention non représenté sur les figures, un panneau plan présentant une largeur double ou triple, c'est-à-dire une développée de circonférence double ou triple, est enroulé sur lui-même pour former deux ou trois couches superposées de manière à supprimer le pont thermique longitudinal. Et, pour éviter les surépaisseurs au niveau du bord longitudinal, on aura pris soin de biseauter lesdits bords longitudinaux au niveau du matériau isolant. Cette disposition simplifie la fabrication et la mise en place du complexe autour de la conduite par rapport au mode de réalisation comportant des vanneaux plans décalés et superposés. Par contre, elle présente l'inconvénient de ne pas supprimer le pont thermique transversal à la jonction entre deux panneaux ainsi enroulés et disposés cote à cote.

Sur la figure 21 on a représenté en vue de côté l'enroulement en spirale sur plusieurs tours et en une seule couche d'un complexe formé à partir d'un panneau isolant de faible largeur mais de très grande longueur, présentant sur son extrados des ondulations selon l'invention, parallèles à l'axe X'X de la conduite. On a représenté uniquement la première couche, mais on appliquera avantageusement un deuxième complexe superposé pour constituer une seconde couche décalée d'un demi pas, de manière à réduire au minimum les ponts thermiques.

Dans un mode de réalisation de fabrication d'une conduite isolée ou d'un ensemble de conduites isolées selon l'invention, on réalise les étapes dans lesquelles
1) on applique ledit matériau isolant (5) sur un premier feuillard métallique constitutif de ladite paroi interne (6) revêtu sur une dite conduite, de manière à ce que ledit matériau isolant présente une forme tubulaire, puis
2) on recouvre ledit matériau isolant avec un deuxième feuillard métallique ondulé constitutif de ladite paroi externe (7) de l'enveloppe, puis
3) on réalise lesdites extrémités opposées dudit complexe en scellant lesdits bords d'extrémité respectifs (6₁, 7₁) desdites parois externe et interne ;
4) on réalise la mise sous vide partiel de l'enveloppe.

## Revendications

1. Complexe isolant (1) apte à être placé autour d'une conduite (2) d'axe longitudinal XX', de préférence une conduite sous-marine destinée aux grandes profondeurs, comprenant un matériau isolant (5) confiné sous vide partiel dans une enveloppe (4), ladite enveloppe comprenant une paroi interne (6) et une paroi externe (7), dans lequel :
- lesdites parois interne (6) et externe (7) sont constituées essentiellement uniquement à partir de feuillards métalliques rectangulaires ou parallélogrammes, comprenant chacune deux bords d'extrémités opposés parallèles (6₁, 7₁) et deux bords longitudinaux opposés parallèles (6₂, 7₂), et
- lesdites parois interne (6) et externe (7) sont scellées l'une à l'autre au moins au niveau de leurs dits bords d'extrémité (6₁, 7₁) respectifs définissant les extrémités opposées dudit complexe dans ladite direction longitudinale (8a, 8b) après mise en place du complexe autour de ladite conduite, lesdits bords d'extrémité s'étendant de préférence dans un plan transversal perpendiculaire à ladite direction longitudinale, et
- les deux dits bords longitudinaux (6₂, 7₂) de chaque paroi (6, 7) sont, soit scellés entre eux, soit scellés à ceux de l'autre paroi, **caractérisé en ce que** :
- l'une au moins des parois interne et externe, de préférence ladite paroi externe (7), comporte au moins une zone ondulée (9) comprenant des ondulations transversales (9₁-9₃) s'étendant dans la direction longitudinale entre lesdites extrémités opposées dudit complexe dans la direction longitudinale XX' (8a, 8b),
- ledit feuillard métallique présentant des caractéristiques semi-rigides de telle sorte que lesdites ondulations étant préformées avant cintrage sont capables de tenir en forme pour offrir une réserve d'étirement ou de resserrement de la paroi contenant lesdites ondulations, lorsque ledit complexe isolant est cintré autour d'une dite conduite.

2. Complexe isolant selon la revendication 1, **caractérisé en ce que** lesdits feuillards métalliques sont réalisés en acier inoxydable, en invar ou en aluminium, de préférence d'une épaisseur de 0,05 à 0,5 mm, et ledit matériau isolant présente une épaisseur de 5 à 100 mm, de préférence de 10 à 50 mm.

3. Complexe isolant selon la revendication 1 ou 2, **caractérisé en ce que** ledit matériau isolant est un matériau nano-poreux choisi parmi :
- les matériaux inorganiques en poudre, en granules ou en fibres tissées ou non tissées, notamment à base de substances minérales choisies parmi la silice, l'alumine, la perlite ou respectivement à base de fibres de verre ou fibres de céramique, et,
- les matériaux organiques à cellules ouvertes, de préférence de la mousse de polyuréthane, et
- des matériaux mixtes organiques/inorganiques tels que la mousse polyuréthane renforcée par des fibres ou des matériaux composites.

4. Complexe isolant selon l'une des revendication 1 à 3, **caractérisé en ce que** la pression à l'intérieur de ladite enveloppe est inférieure à 5 mbar, de préférence inférieure à 1 mbar.

5. Complexe isolant selon l'une des revendications 1 à 4, **caractérisé en ce que** les deux dits bords longitudinaux opposés parallèles de chaque paroi (6₂, 7₂) sont scellés entre eux et ledit complexe isolant est de forme substantiellement tubulaire, de sorte que :
- chacune desdites extrémités opposées (8a, 8b) du complexe (1) présente une forme délimitée par les surfaces cylindriques à section circulaire d'axe correspondant à ladite direction longitudinale XX' desdits bords d'extrémité (6₁, 7₁) de chacune desdites parois interne (6) et externe (7), et
- ladite zone ondulée (9₁-9₃) entre lesdites extrémités opposées (8a, 8b) est définie par une surface cylindrique d'axe longitudinal XX', à section transversale partiellement circulaire comportant desdites ondulations (9), de préférence au niveau de la paroi externe, et
- l'autre paroi, de préférence ladite paroi interne est définie par une surface cylindrique comportant une section transversale circulaire sans ondulation.

6. Complexe isolant selon la revendication 5, **caractérisé en ce que** la ou lesdites zones ondulées n'occupent pas toute la périphérie de la paroi, de préférence de la paroi externe, et sont espacées et réparties symétriquement et régulièrement le long du périmètre de ladite section transversale partiellement circulaire, de préférence au moins en trois zones ondulées (9₁, 9₂, 9₃).

7. Complexe isolant selon la revendication 5 ou 6, **caractérisé en ce que** chacune desdites parois interne et externe est obtenue à partir d'un feuillard métallique rectangulaire dont les deux bords longitudinaux opposés parallèles (6₂, 7₂) de chaque dite paroi (6, 7) sont raboutés l'un sur l'autre pour former un dit complexe isolant tubulaire.

8. Complexe isolant selon la revendication 7, **caractérisé en ce que** la face tournée vers l'intérieur de l'enveloppe d'un desdits bords longitudinaux (6₂, 7₂) d'une dite paroi est raboutée sur la face tournée vers l'extérieur de l'enveloppe de l'autre dit bord longitudinal opposé (6₂, 7₂) de ladite paroi.

9. Complexe isolant selon l'une des revendications 1 à 8, **caractérisé en ce que** lesdites extrémités opposées (.8a, 8b) du complexe (1) sont constituées par les faces internes à l'enveloppe desdits bords d'extrémité respectifs (6₁, 7₁) dans ladite direction longitudinale XX' de chacune desdites parois interne et externe (6, 7), scellées directement l'une contre l'autre de préférence par collage ou soudage.

10. Complexe isolant selon la revendication 9, **caractérisé en ce que** lesdites extrémités opposées (8a, 8b) dans ladite direction longitudinale XX' dudit complexe formées par lesdits bords d'extrémité respectifs desdites parois interne et externe, forment une surface cylindrique de diamètre sensiblement identique au diamètre externe du matériau isolant de forme substantiellement tubulaire confiné dans ladite enveloppe.

11. Complexe isolant selon l'une des revendications 1 à 8, **caractérisé en ce que** lesdites extrémités opposées (8a, 8b) du complexe sont constituées par les faces interne à l'enveloppe desdits bords d'extrémité respectifs (6₁, 7₁) dans ladite direction longitudinale XX', scellés par collage ou de préférence par soudage contre un dispositif de raccordement (10) de forme annulaire comportant un corps principal (10a) en matériau isolant rigide, de préférence en matériau composite ou mousse syntactique, de forme annulaire, corps principal (10a) dont une face cylindrique interne est de préférence revêtue d'une première virole métallique (10b), sur laquelle est scellée ou de préférence soudée la face interne à l'enveloppe dudit bord d'extrémité (6₁) de la paroi interne et dont une face cylindrique externe est de préférence revêtue d'une seconde virole métallique (10c), sur laquelle est scellée ou de préférence soudée la face interne dudit bord d'extrémité (7₁) de la paroi externe.

12. Complexe isolant selon l'une des revendications 1 à 4, **caractérisé en ce que** les deux dits bords longitudinaux (6₂, 7₂) de chaque paroi sont scellées aux bords longitudinaux respectifs de l'autre paroi pour former les bords longitudinaux (8c, 8d) dudit complexe, lesdits bords longitudinaux opposés parallèles dudit complexe (8c, 8d) n'étant pas raboutés l'un à l'autre lorsque ledit complexe est cintré ou enroulé autour de ladite conduite

13. Complexe selon la revendication 12, **caractérisé en ce que** lesdits bords longitudinaux opposés parallèles dudit complexe (8c, 8d) sont rapprochés l'un de l'autre lorsque ledit complexe est cintré en une couche ou enroulé en spirale en une couche sur plusieurs tours autour de ladite conduite pour recouvrir ladite conduite en formant une structure tubulaire ouverte (30b) d'axe longitudinal XX' présentant une discontinuité (31a, 31 b) entre les deux dits bords longitudinaux du complexe.

14. Complexe selon la revendication 12, **caractérisé en ce que** ledit complexe est enroulé sur lui-même formant plusieurs couches superposées autour de ladite conduite, à partir d'un même complexe, supprimant toute discontinuité d'isolation entre les deux dits bords longitudinaux dudit complexe.

15. Complexe isolant selon l'une des revendications 12 à 14, **caractérisé en ce que** ladite zone ondulée (9) recouvre sensiblement toute la largeur de ladite paroi dans la direction transversale, de préférence de ladite paroi externe, lorsque ledit complexe est en position développée sensiblement plane.

16. Complexe isolant selon la revendication 12 à 15, **caractérisé en ce que**
- lesdites extrémités opposées (8a, 8b) du complexe dans ladite direction longitudinale XX' sont constituées par les faces internes à l'enveloppe desdits bords d'extrémité respectifs (6₁, 7₁) de chacune desdites parois interne et externe (6, 7) scellées directement l'une contre l'autre de préférence par collage ou soudage, et
- les bords longitudinaux (8c, 8d) dudit complexe sont constitués par les faces internes à l'enveloppe desdits bords longitudinaux (6₂, 7₂) de chacune desdites parois interne et externe (6, 7), scellées directement l'une contre l'autre, de préférence par collage ou soudage.

17. Complexe isolant selon la revendication 16, **caractérisé en ce que** lesdites parois interne et externe sont de forme rectangulaire lorsque ledit complexe est en position développée plane (30a), et après un dit cintrage dudit complexe autour d'une dite conduite, ledit complexe forme une dite structure tubulaire ouverte (30b) présentant une discontinuité le long d'une génératrice 31 a dans ladite direction longitudinale XX'.

18. Complexe isolant selon la revendication 17, **caractérisé en ce que** lesdites extrémités opposées (8a, 8b) dans ladite direction longitudinale dudit complexe formées par les bords respectifs desdites parois interne et externe, forment une surface cylindrique ouverte le long d'une dite génératrice (31a) dans ladite direction longitudinale XX', surface cylindrique de diamètre sensiblement identique au diamètre interne du matériau isolant de forme substantiellement tubulaire confiné dans ladite enveloppe.

19. Complexe isolant selon l'une des revendications 12 à 16, **caractérisé en ce que** les bords d'extrémité (6₁, 7₁) et bords longitudinaux (6₂, 7₂) desdites parois interne et externe définissent un parallélogramme comprenant un angle de préférence de 15 à 60° lorsque ledit complexe est en dite position développée plane, ledit parallélogramme étant cintré et, le cas échéant, enroulé sur plusieurs tours en une seule couche autour d'une dite conduite pour former une dite structure tubulaire présentant une discontinuité le long d'une courbe hélicoïdale (31 b) formée par l'espace entre lesdits bords longitudinaux (8c, 8d) dudit complexe, non raboutés l'un à l'autre après cintrage dudit complexe et, le cas échéant, enroulement dudit complexe autour de la conduite.

20. Complexe isolant selon l'une des revendications 1 à 19, **caractérisé en ce que** ladite enveloppe comprend au moins un orifice obturable (11), de préférence une pluralité d'orifices obturables dans les zones ne comportant pas d'ondulation, de préférence sur la paroi externe, permettant une mise sous vide partiel de l'enveloppe.

21. Conduite isolée, de préférence conduite sous-marine destinée aux grandes profondeurs **caractérisée en ce qu'**elle comprend des complexes tubulaires unitaires (1) selon l'une des revendications 1 à 20 placés autour de ladite conduite.

22. Conduite isolée selon la revendication 21 **caractérisée en ce que** les dits complexes tubulaires unitaires (1) sont disposés de façon contiguë les uns à la suite des autres dans ladite direction longitudinale XX' autour d'une dite conduite, chacun ayant une longueur de 2 à 10 m, de préférence de 3 à 6 m.

23. Ensemble de deux conduites coaxiales comprenant une conduite interne (3) et une conduite externe (2) comprenant des complexes tubulaires unitaires (1) selon l'une des revendications 1 à 20, placés dans l'espace annulaire entre les deux dites conduites, ladite conduite interne, et de préférence ladite conduite externe, comprenant une dite conduite isolée selon l'une des revendications 21 ou 22.

24. Ensemble de deux conduites coaxiales selon la revendication 23 **caractérisé en ce que** les dites conduites externe (2) et interne (3) sont reliées entre elles par des liens mécaniques centreurs (12) comprenant de préférence des pièces en matériau plastique, de préférence encore en élastomère, pièces contre lesquelles viennent buter les dites extrémités (8a, 8b) de certains des dits complexes tubulaires (1).

25. Ensemble de deux conduites selon la revendication 23 ou 24, **caractérisé en ce que** la pression dans l'espace entre les deux dites conduites, en dehors de l'enveloppe, est inférieure à 5 bars, de préférence identique à la pression atmosphérique.

26. Ensemble de deux conduites selon l'une des revendications 23 à 25, **caractérisé en ce qu'**il comprend des complexes isolants selon l'une des revendications 1 à 16 disposés de préférence les uns à la suite des autres dans ladite direction longitudinale XX' d'une part, et d'autre part disposés les uns dessus les autres de manière à ce qu'un complexe isolant supérieur (1a) recouvre le cas échéant les zones ouvertes constituées par les deux bords longitudinaux (8c, 8d) d'un même complexe rapprochés mais non raboutés l'un à l'autre desdits complexes isolants inférieurs (1 b) et, le cas échéant, recouvre les zones ouvertes constituées par les bords d'extrémité (8a, 8b) de deux dits complexes inférieurs disposés côte à côte.

27. Procédé de fabrication d'une conduite isolée ou d'un ensemble de deux conduites coaxiales selon l'une des revendications 21 à 26, **caractérisé en ce que** :
- on préforme un complexe tubulaire selon l'une des revendications 1 à 11 et 20, et
- on enfile ledit complexe tubulaire autour d'une dite conduite ou respectivement dans l'espace annulaire interne d'un ensemble de deux conduites coaxiales.

28. Procédé de fabrication d'une conduite isolée ou d'un ensemble de deux conduites coaxiales selon l'une des revendications 21 à 26, **caractérisé en ce que** :
- on réalise un complexe isolant en position développée plane selon l'une des revendications 12 à 20, et
- on forme un complexe isolant par cintrage ou enroulement dudit complexe sur une dite conduite, le cas échéant, la conduite interne d'un ensemble de deux conduites coaxiales.

29. Procédé de fabrication d'une conduite isolée ou d'un ensemble de deux conduites coaxiales selon l'une des revendications 23 à 26, **caractérisé en ce qu'**il comprend les étapes dans lesquelles :
1) on applique ledit matériau isolant (5) sur un premier feuillard métallique constitutif de ladite paroi interne (6) revêtu sur une dite conduite, de manière à ce que ledit matériau isolant présente une forme tubulaire, puis
2) on recouvre ledit matériau isolant avec un deuxième feuillard métallique ondulé constitutif de ladite paroi externe (7) de l'enveloppe, puis
3) on réalise lesdites extrémités opposées (8a, 8b) dudit complexe en scellant lesdits bords d'extrémité respectifs (6₁, 7₁) desdites parois externe et interne ;
4) on réalise la mise sous vide partiel de l'enveloppe.

30. Procédé de fabrication d'un complexe isolant selon l'une des revendications 1 à 20, **caractérisé en ce que** :
1) on applique ledit matériau isolant (5) sur un premier feuillard métallique constitutif de ladite paroi interne (6), lui-même posé sur un mandrin tubulaire ou une surface plane, puis
2) on recouvre ledit matériau isolant avec un deuxième feuillard métallique ondulé constitutif de ladite paroi externe (7) de l'enveloppe, puis
3) on réalise lesdites extrémités opposées dudit complexe en scellant lesdits bords d'extrémité respectifs (6₁, 7₁) desdites parois externe et interne.

## Patentansprüche

1. Isolierkomplex (1), der geeignet ist, um eine Leitung (2) mit der Längsachse XX', vorzugsweise eine für große Tiefen bestimmte Unterwasserleitung herum angeordnet zu werden, umfassend ein Isoliermaterial (5), das unter Teilvakuum in einem Mantel (4) eingeschlossen ist, wobei der Mantel eine Innenwand (6) und eine Außenwand (7) umfasst, wobei:
- die Innenwand (6) und die Außenwand (7) im Wesentlichen lediglich aus rechteckigen oder Parallelogramm-Metallbändern gebildet sind, wobei sie jeweils zwei gegenüberliegende parallele endseitige Ränder (6₁, 7₁) und zwei gegenüberliegende parallele Längsränder (6₂, 7₂) umfassen, und
- die Innenwand (6) und die Außenwand (7) wenigstens im Bereich ihrer jeweiligen endseitigen Ränder (6₁, 7₁), welche die gegenüberliegenden Enden des Komplexes in der Längsrichtung (8a, 8b) nach dem Anbringen des Komplexes um die Leitung definieren, aneinander verschlossen sind, wobei die endseitigen Ränder vorzugsweise in einer zu der Längsrichtung senkrechten Querebene verlaufen, und
- die beiden Längsränder (6₂, 7₂) einer jeden Wand (6, 7) entweder untereinander verschlossen oder an denjenigen der anderen Wand verschlossen sind, **dadurch gekennzeichnet, dass**
- wenigstens eine der Innen- und Außenwände, vorzugsweise die Außenwand (7), wenigstens einen gewellten Bereich (9) umfasst, der sich in Längsrichtung zwischen den gegenüberliegenden Enden des Komplexes in der Längsrichtung XX' (8a, 8b) erstreckende Querwellen (9₁-9₃) aufweist,
- wobei das Metallband halbstarre Eigenschaften derart aufweist, dass die Wellen, die vor dem Biegen vorgeformt werden, in der Lage sind, in Form zu halten, um einen Vorrat zum Strecken oder Verengen der die Wellen umfassenden Wand zu bieten, wenn der Isolierkomplex um eine Leitung herum gebogen wird.

2. Isolierkomplex nach Anspruch 1, **dadurch gekennzeichnet, dass** die Metallbänder aus rostfreiem Stahl, aus Invar oder aus Aluminium, vorzugsweise mit einer Dicke von 0,05 bis 0,5 mm gebildet sind und das Isoliermaterial eine Dicke von 5 bis 100 mm, vorzugsweise von 10 bis 50 mm aufweist.

3. Isolierkomplex nach Anspruch 1 oder 2, **dadurch gekennzeichnet, dass** das Isoliermaterial ein nanoporöses Material ist, das ausgewählt ist aus:
- den anorganischen Materialien in Pulverform, Granulatform oder aus gewebten oder nicht gewebten Fasern, insbesondere auf der Basis von mineralischen Substanzen, ausgewählt aus Siliziumdioxid, Aluminiumoxid, Perlit, bzw. auf der Basis von Glasfasern oder Keramikfasern, und
- den offenzelligen organischen Materialien, vorzugsweise Polyurethanschaum, und
- organischen/anorganischen Mischmaterialien, wie faserverstärkter Polyurethanschaum oder Verbundmaterialien.

4. Isolierkomplex nach einem der Ansprüche 1 bis 3, **dadurch gekennzeichnet, dass** der Druck innerhalb des Mantels weniger als 5 mbar, vorzugsweise weniger als 1 mbar beträgt.

5. Isolierkomplex nach einem der Ansprüche 1 bis 4, **dadurch gekennzeichnet, dass** die beiden gegenüberliegenden parallelen Längsränder jeder Wand (6₂, 7₂) untereinander verschlossen sind und der Isolierkomplex im Wesentlichen rohrförmig ausgebildet ist, so dass:
- jedes der gegenüberliegenden Enden (8a, 8b) des Komplexes (1) eine Form aufweist, die durch die Zylinderflächen mit kreisförmigem Querschnitt mit einer der Längsrichtung XX' entsprechenden Achse, der endseitigen Ränder (6₁, 7₁) einer jeden der Innenwand (6) und Außenwand (7) begrenzt ist, und
- der gewellte Bereich (9₁-9₃) zwischen den gegenüberliegenden Enden (8a, 8b) durch eine Zylinderfläche mit der Längsachse XX', mit teilweise kreisförmigem Querschnitt mit Wellen (9), vorzugsweise im Bereich der Außenwand, definiert ist, und
- die andere Wand, vorzugsweise die Innenwand, durch eine Zylinderfläche, die einen kreisförmigen Querschnitt ohne Welle aufweist, definiert ist.

6. Isolierkomplex nach Anspruch 5, **dadurch gekennzeichnet, dass** der oder die gewellten Bereiche nicht den gesamten Umfang der Wand, vorzugsweise der Außenwand einnehmen und entlang des Umfangs des teilweise kreisförmigen Querschnitts symmetrisch und gleichmäßig beabstandet und verteilt sind, vorzugsweise wenigstens auf drei gewellte Bereiche (9₁, 9₂, 9₃).

7. Isolierkomplex nach Anspruch 5 oder 6, **dadurch gekennzeichnet, dass** eine jede der Innen- und Außenwände aus einem rechteckigen Metallband erhalten wird, dessen beide gegenüberliegende parallele Längsränder (6₂, 7₂) jeder Wand (6, 7) aneinandergefügt sind, um einen rohrförmigen Isolierkomplex zu bilden.

8. Isolierkomplex nach Anspruch 7, **dadurch gekennzeichnet, dass** die der Innenseite des Mantels zugewandte Seite von einem der Längsränder (6₂, 7₂) einer Wand an die der Außenseite des Mantels zugewandte Seite des anderen gegenüberliegenden Längsrandes (6₂, 7₂) der Wand angefügt ist.

9. Isolierkomplex nach einem der Ansprüche 1 bis 8, **dadurch gekennzeichnet, dass** die gegenüberliegenden Enden (8a, 8b) des Komplexes (1) durch die innerhalb des Mantels gelegenen Seiten der jeweiligen endseitigen Ränder (6₁, 7₁) in der Längsrichtung XX' einer jeden der Innen- und Außenwände (6, 7) gebildet sind, die direkt - vorzugsweise durch Kleben oder Schweißen - aneinander verschlossen sind.

10. Isolierkomplex nach Anspruch 9, **dadurch gekennzeichnet, dass** die gegenüberliegenden Enden (8a, 8b) in der Längsrichtung XX' des Komplexes, die durch die jeweiligen endseitigen Ränder der Innen- und Außenwände gebildet sind, eine Zylinderfläche mit einem Durchmesser, der im Wesentlichen mit dem Außendurchmesser des in dem Mantel eingeschlossenen, im Wesentlichen rohrförmigen Isoliermaterials identisch ist, bilden.

11. Isolierkomplex nach einem der Ansprüche 1 bis 8, **dadurch gekennzeichnet, dass** die gegenüberliegenden Enden (8a, 8b) des Komplexes durch die innerhalb des Mantels gelegenen Seiten der jeweiligen endseitigen Ränder (6₁, 7₁) in der Längsrichtung XX' gebildet sind, die an einer ringförmigen Verbindungsvorrichtung (10), welche einen ringförmigen Hauptkörper (10a) aus starrem Isoliermaterial, vorzugsweise aus Verbundmaterial oder syntaktischem Schaum umfasst, verklebt oder vorzugsweise verschweißt sind, Hauptkörper (10a), von dem eine zylindrische Innenseite vorzugsweise mit einem ersten Metallring (10b) verkleidet ist, an dem die innerhalb des Mantels gelegene Seite des endseitigen Randes (6₁) der Innenwand verschlossen oder vorzugsweise verschweißt ist, und von dem eine zylindrische Außenseite vorzugsweise mit einem zweiten Metallring (10c) verkleidet ist, an dem die Innenseite des endseitigen Randes (7₁) der Außenwand verschlossen oder vorzugsweise verschweißt ist.

12. Isolierkomplex nach einem der Ansprüche 1 bis 4, **dadurch gekennzeichnet, dass** die beiden Längsränder (6₂, 7₂) einer jeden Wand an den jeweiligen Längsrändern der anderen Wand verschlossen sind, um die Längsränder (8c, 8d) des Komplexes zu bilden, wobei die gegenüberliegenden parallelen Längsränder des Komplexes (8c, 8d) nicht aneinandergefügt sind, wenn der Komplex um die Leitung gebogen oder gewickelt ist.

13. Komplex nach Anspruch 12, **dadurch gekennzeichnet, dass** die gegenüberliegenden parallelen Längsränder des Komplexes (8c, 8d) einander genähert sind, wenn der Komplex um die Leitung herum in einer Lage gebogen oder in einer Lage über mehrere Runden spiralförmig gewickelt ist, um die Leitung unter Bildung einer offenen rohrförmigen Struktur (30b) mit der Längsachse XX', welche zwischen den beiden Längsrändern des Komplexes eine Unterbrechung (31 a, 31 b) aufweist, zu bedecken.

14. Komplex nach Anspruch 12, **dadurch gekennzeichnet, dass** der Komplex um sich selbst gewickelt ist, wobei aus einem gleichen Komplex mehrere übereinander liegende Lagen um die Leitung herum gebildet werden, wodurch jedwede Isolierungsunterbrechung zwischen den beiden Längsrändern des Komplexes beseitigt wird.

15. Isolierkomplex nach einem der Ansprüche 12 bis 14, **dadurch gekennzeichnet, dass** der gewellte Bereich (9) im Wesentlichen die gesamte Breite der Wand in der Querrichtung, vorzugsweise der Außenwand, bedeckt, wenn der Komplex sich in im Wesentlichen ebener abgewickelter Position befindet.

16. Isolierkomplex nach Anspruch 12 bis 15, **dadurch gekennzeichnet, dass**
- die gegenüberliegenden Enden (8a, 8b) des Komplexes in der Längsrichtung XX' durch die innerhalb des Mantels gelegenen Seiten der jeweiligen endseitigen Ränder (6₁, 7₁) einer jeden der Innen- und Außenwände (6, 7), die vorzugsweise durch Kleben oder Schweißen direkt aneinander verschlossen sind, gebildet sind, und
- die Längsränder (8c, 8d) des Komplexes durch die innerhalb des Mantels gelegenen Seiten der Längsränder (6₂, 7₂) einer jeden der Innen- und Außenwände (6, 7), die vorzugsweise durch Kleben oder Schweißen direkt aneinander verschlossen sind, gebildet sind.

17. Isolierkomplex nach Anspruch 16, **dadurch gekennzeichnet, dass** die Innen- und die Außenwand eine Rechteckform aufweisen, wenn der Komplex sich in ebener abgewickelter Position (30a) befindet, und nach einem Biegen des Komplexes um eine Leitung der Komplex eine offene rohrförmige Struktur (30b) bildet, die entlang einer Mantellinie (31 a) in der Längsrichtung XX' eine Unterbrechung aufweist.

18. Isolierkomplex nach Anspruch 17, **dadurch gekennzeichnet, dass** die gegenüberliegenden Enden (8a, 8b) in der Längsrichtung des Komplexes, die durch die jeweiligen Ränder der Innen- und der Außenwand gebildet sind, eine entlang einer Mantellinie (31 a) in der Längsrichtung XX' offene Zylinderfläche bilden, Zylinderfläche mit einem Durchmesser, der mit dem Innendurchmesser des in dem Mantel eingeschlossenen, im wesentlichen rohrförmigen Isoliermaterials im Wesentlichen identisch ist.

19. Isolierkomplex nach einem der Ansprüche 12 bis 16, **dadurch gekennzeichnet, dass** die endseitigen Ränder (6₁, 7₁) und Längsränder (6₂, 7₂) der Innen- und der Außenwand ein Parallelogramm mit einem Winkel vorzugsweise von 15 bis 60° definieren, wenn sich der Komplex in ebener abgewickelter Position befindet, wobei das Parallelogramm um eine Leitung herum in einer einzigen Lage gebogen und gegebenenfalls über mehrere Runden gewickelt ist, um eine rohrförmige Struktur zu bilden, die entlang einer Spiralkurve (31 b), welche durch den Raum zwischen den Längsrändern (8c, 8d) des Komplexes, die nach dem Biegen des Komplexes und gegebenenfalls Wickeln des Komplexes um die Leitung nicht aneinandergefügt sind, gebildet ist, eine Unterbrechung aufweist.

20. Isolierkomplex nach einem der Ansprüche 1 bis 19, **dadurch gekennzeichnet, dass** der Mantel wenigstens eine verschließbare Öffnung (11), vorzugsweise eine Vielzahl von verschließbaren Öffnungen in den keine Welle aufweisenden Bereichen, vorzugsweise an der Außenwand aufweist, die ein Teilevakuieren des Mantels ermöglichen.

21. Isolierte Leitung, vorzugsweise für große Tiefen bestimmte Unterwasserleitung, **dadurch gekennzeichnet, dass** sie rohrförmige Einzelkomplexe (1) nach einem der Ansprüche 1 bis 20, die um die Leitung herum angeordnet sind, umfasst.

22. Isolierte Leitung nach Anspruch 21, **dadurch gekennzeichnet, dass** die rohrförmigen Einzelkomplexe (1) in der Längsrichtung XX' um eine Leitung herum aneinandergrenzend angeordnet sind, wobei ein jeder eine Länge von 2 bis 10 m, vorzugsweise von 3 bis 6 m aufweist.

23. Anordnung aus zwei koaxialen Leitungen, umfassend eine innere Leitung (3) und eine äußere Leitung (2), die rohrförmige Einzelkomplexe (1) nach einem der Ansprüche 1 bis 20 umfassen, die in dem ringförmigen Raum zwischen den beiden Leitungen angeordnet sind, wobei die innere Leitung, und vorzugsweise die äußere Leitung, eine isolierte Leitung nach einem der Ansprüche 21 oder 22 umfasst.

24. Anordnung aus zwei koaxialen Leitungen nach Anspruch 23, **dadurch gekennzeichnet, dass** die äußere Leitung (2) und die innere Leitung (3) durch mechanische Zentrierverbindungen (12), die vorzugsweise Teile aus Kunststoff, weiterhin vorzugsweise aus Elastomer, Teile, an denen die Enden (8a, 8b) von einigen der rohrförmigen Komplexe (1) in Anschlag gelangen, umfassen, untereinander verbunden sind.

25. Anordnung aus zwei Leitungen nach Anspruch 23 oder 24, **dadurch gekennzeichnet, dass** der Druck in dem Raum zwischen den beiden Leitungen, außerhalb des Mantels, weniger als 5 bar beträgt, vorzugsweise mit dem atmosphärischen Druck identisch ist.

26. Anordnung aus zwei Leitungen nach einem der Ansprüche 23 bis 25, **dadurch gekennzeichnet, dass** sie Isolierkomplexe nach einem der Ansprüche 1 bis 16 umfasst, die vorzugsweise einerseits in der Längsrichtung XX' nacheinander angeordnet sind und andererseits übereinander angeordnet sind, so dass ein oberer Isolierkomplex (1a) gegebenenfalls die offenen Bereiche bedeckt, welche durch die beiden genäherten, aber nicht aneinandergefügten Längsränder (8c, 8d) eines gleichen Komplexes der unteren Isolierkomplexe (1 b) gebildet sind, und gegebenenfalls die offenen Bereiche bedeckt, welche durch die endseitigen Ränder (8a, 8b) von zwei nebeneinander angeordneten unteren Komplexen gebildet sind.

27. Verfahren zur Herstellung einer isolierten Leitung oder einer Anordnung aus zwei koaxialen Leitungen nach einem der Ansprüche 21 bis 26, **dadurch gekennzeichnet, dass**:
- ein rohrförmiger Komplex nach einem der Ansprüche 1 bis 11 und 20 vorgeformt wird und
- der rohrförmige Komplex um eine Leitung aufgeschoben bzw. in den ringförmigen Innenraum einer Anordnung aus zwei koaxialen Leitungen eingeschoben wird.

28. Verfahren zur Herstellung einer isolierten Leitung oder einer Anordnung aus zwei koaxialen Leitungen nach einem der Ansprüche 21 bis 26, **dadurch gekennzeichnet, dass**:
- ein Isolierkomplex in ebener abgewickelter Position nach einem der Ansprüche 12 bis 20 ausgebildet wird und
- ein Isolierkomplex durch Biegen oder Wickeln des Komplexes um eine Leitung, gegebenenfalls die innere Leitung einer Anordnung aus zwei koaxialen Leitungen geformt wird.

29. Verfahren zur Herstellung einer isolierten Leitung oder einer Anordnung aus zwei koaxialen Leitungen nach einem der Ansprüche 23 bis 26, **dadurch gekennzeichnet, dass** es die Schritte umfasst, bei denen:
1) das Isoliermaterial (5) auf ein die Innenwand (6) bildendes, auf eine Leitung aufgebrachtes erstes Metallband appliziert wird, so dass das Isoliermaterial eine Rohrform aufweist, anschließend
2) das Isoliermaterial mit einem die Außenwand (7) des Mantels bildenden zweiten gewellten Metallband bedeckt wird, dann
3) die gegenüberliegenden Enden (8a, 8b) des Komplexes durch Verschließen der jeweiligen endseitigen Ränder (6₁, 7₁) der Außen- und Innenwände ausgebildet werden;
4) das Teilevakuieren des Mantels vollzogen wird.

30. Verfahren zur Herstellung eines Isolierkomplexes nach einem der Ansprüche 1 bis 20, **dadurch gekennzeichnet, dass**:
1) das Isoliermaterial (5) auf ein die Innenwand (6) bildendes erstes Metallband, das selbst auf einen rohrförmigen Dorn oder eine ebene Fläche aufgelegt ist, aufgebracht wird, anschließend
2) das Isoliermaterial mit einem die Außenwand (7) des Mantels bildenden zweiten gewellten Metallband bedeckt wird, dann
3) die gegenüberliegenden Enden des Komplexes durch Verschließen der jeweiligen endseitigen Ränder (6₁, 7₁) der Außen- und Innenwände ausgebildet werden.

## Claims

1. An insulating complex (1) suitable for being placed around a pipe (2) of longitudinal axis XX', preferably an undersea pipe for great depths, the complex comprising insulating material (5) confined in a partial vacuum in a case (4), said case comprising an inner wall (6) and an outer wall (7), wherein:
· said inner and outer walls (6, 7) are essentially solely made of rectangular or parallelogram-shaped metal strips, each having two parallel opposite end edges (6₁, 7₁) and two parallel opposite longitudinal edges (6₂, 7₂); and
· said inner and outer walls (6, 7) are sealed to each other, at least at said respective end edges (6₁, 7₁) defining the opposite ends of said complex in said longitudinal direction (8a, 8b) after the complex has been put into place around said pipe, said end edges preferably extending in a transverse plane perpendicular to said longitudinal direction; and
· the two said longitudinal edges (6₂, 7₂) of each wall (6, 7) are either sealed to each other or are sealed to the longitudinal edges of the other wall;
**characterized in that**:
· at least one of said inner and outer walls, preferably said outer wall (7) includes at least one corrugated zone (9) having transverse corrugations (9₁-9₃) extending in the longitudinal direction between said opposite ends of said complex in the longitudinal direction XX' (8a, 8b),
· said metal strip presenting semi-rigid characteristics so that corrugations being performed prior to bending are capable of staying in form providing a stretching or shrinking reserve for the wall comprising said corrugations when the insulating complex is bent around said pipe.

2. An insulating complex according to claim 1, **characterized in that** said metal strips are made of stainless steel, of Invar, or of aluminum, preferably having thickness in the range 0.05 mm to 0.5 mm, and said insulating material presents thickness lying in the range 5 mm to 100 mm, and preferably in the range 10 mm to 50 mm.

3. An insulating complex according to claim 1 or claim 2, **characterized in that** said insulating material is a nanoporous material selected from:
· inorganic materials in powder, granule or woven or non-woven fiber form, in particular materials based on minerals selected from silica, alumina, perlite, or respectively based on glass fibers or on ceramic fibers; and
· open-celled organic materials, and preferably polyurethane foam; and
· combined organic and inorganic materials such as polyurethane foam reinforced by fibers or composite materials.

4. An insulating complex according to any one of claims 1 to 3, **characterized in that** the pressure inside said case is less than 5 mbar, and preferably less than 1 mbar.

5. An insulating complex according to any one of claims 1 to 4, **characterized in that** said two parallel opposite longitudinal edges (6₂, 7₂) of each wall are sealed to each other and said insulating complex is substantially in tubular in shape, such that:
· each of said opposite ends (8a, 8b) of the complex (1) presents a shape defined by cylindrical surfaces of circular section of axis corresponding to said longitudinal direction XX' of said end edges (6₁, 7₁) of each of said inner and outer walls (6, 7); and
· said corrugated zone (9₁-9₃) between said opposite ends (8a, 8b) is defined by a cylindrical surface of longitudinal axis XX', of cross-section that is partially circular including said corrugations (9), preferably in the outer wall; and
· the other wall, preferably said inner wall, is defined by a cylindrical surface of cross-section that is circular without corrugations.

6. An insulating complex according to claim 5, **characterized in that** said corrugated zone(s) occupy(ies) only a fraction of the periphery of the wall, preferably the outer wall, and are spaced apart and distributed symmetrically and regularly along the perimeter of said partially circular cross-section, preferably occupying at least three corrugated zones (9₁, 9₂, 9₃).

7. An insulating complex according to claim 5 or claim 6, **characterized in that** each of said inner and outer walls is obtained from a rectangular metal strip in which the two parallel opposite longitudinal edges (6₂, 7₂) of each of said walls (6, 7) are end-joined one on the other to form a said insulating tubular complex.

8. An insulating complex according to claim 7, **characterized in that** the face of one of said longitudinal edges (6₂, 7₂) of one of said walls that faces towards the inside of the case is end-joined to the face of the other one of said opposite longitudinal edges (6₂, 7₂) of the other wall that faces towards the outside of the case.

9. An insulating complex according to any one of claims 1 to 8, **characterized in that** said opposite ends (8a, 8b) of the complex (1) are constituted by the faces on the inside of the case of said respective end edges (6₁, 7₁) in said longitudinal direction XX' of each of said inner and outer walls (6, 7) and are sealed directly one to the other, preferably by adhesive or by welding.

10. An insulating complex according to claim 9, **characterized in that** said opposite ends (8a, 8b) in said longitudinal direction XX' of said complex formed by said respective end edges of said inner and outer walls form a cylindrical surface of diameter substantially identical to the outside diameter of the insulating material of substantially tubular shape confined in said case.

11. An insulating complex according to any one of claims 1 to 8, **characterized in that** said opposite ends (8a, 8b) of the complex are constituted by the faces inside the case of said respective end edges (6₁, 7₁) in said longitudinal direction XX', sealed by adhesive or preferably by welding against a connection device (10) of annular shape comprising a main body (10a) of rigid insulating material, preferably of composite material or syntactic foam, of annular shape, the main body (10a) having an inner cylindrical face that is preferably covered by a first metal ferrule (10b) to which the face inside the case of said end edge (6₁) of the inner wall is sealed or preferably welded, and having an outer cylindrical face that is preferably covered in a second metal ferrule (10c) to which the inside face of said end edge (7₁) of the outer wall is sealed or preferably welded.

12. An insulating complex according to any one of claims 1 to 4, **characterized in that** said two longitudinal edges (6₂, 7₂) of each wall are sealed to the respective longitudinal edges of the other wall to form the longitudinal edges (8c, 8d) of said complex, said parallel opposite longitudinal edges of said complex (8c, 8d) not being end-joined one against the other when said complex is bent or wound around said pipe.

13. A complex according to claim 12, **characterized in that** said parallel opposite longitudinal edges of said complex (8c, 8d) are moved towards each other when said complex is bent into a layer or spiral-wound into a layer over a plurality of turns around said pipe in order to cover said pipe, forming an open tubular structure (30b) of longitudinal axis XX' presenting a discontinuity (31a, 31b) between said two longitudinal edges of the complex.

14. A complex according to claim 12, **characterized in that** said complex is rolled up onto itself to form a plurality of superposed layers around said pipe, using the same complex, thereby eliminating any discontinuity of insulation between said two longitudinal edges of said complex.

15. An insulating complex according to any one of claims 12 to 14, **characterized in that** said corrugated zone (9) substantially covers the entire width of said wall in the transverse direction, preferably of said outer wall, when said complex is in a substantially plane developed configuration.

16. An insulating complex according to any one of claims 12 to 15, **characterized in that**:
· said opposite ends (8a, 8b) of the complex in said longitudinal direction XX' are constituted by the faces inside the case of said respective end edges (6₁, 7₁) of each of said inner and outer walls (6, 7) directly sealed against each other, preferably by adhesive or by welding; and
· the longitudinal edges (8c, 8d) of said complex are constituted by the faces inside the case of said longitudinal edges (6₂, 7₂) of each of said inner and outer walls (6, 7), sealed directly to each other, preferably by adhesive or by welding.

17. An insulating complex according to claim 16, **characterized in that** said inner and outer walls are of rectangular shape when said complex is in a plane developed configuration (30a), and after said complex has been bent around a said pipe, said complex forms a said open tubular structure (30b) presenting a discontinuity along a generator line (31a) extending in said longitudinal direction XX'.

18. An insulating complex according to claim 17, **characterized in that** said opposite ends (8a, 8b) in said longitudinal direction of said complex formed by the respective edges of said inner and outer walls form an open cylindrical surface along a said generator line (31a) in said longitudinal direction XX', which cylindrical surface has a diameter substantially identical to the inside diameter of the insulating material of substantially tubular shape confined inside said case.

19. An insulating complex according to any one of claims 12 to 16, **characterized in that** the end edges (6₁, 7₁) and the longitudinal edges (6₂, 7₂) of said inner and outer walls define a parallelogram possessing a corner of angle preferably lying in the range 15° to 60° when said complex is in said plane developed configuration, said parallelogram being bent and where appropriate, wound in a plurality of turns constituting a single layer around a said pipe in order to form a said tubular structure presenting a discontinuity along a helical bend (31b) formed by the gap between said longitudinal edges (8c, 8d) of said complex that are not end-joined on to the other after said complex has been bent, and, where appropriate, said complex has been wound around the pipe.

20. An insulating complex according to any one of claims 1 to 19, **characterized in that** said case includes at least one closable orifice (11), preferably a plurality of closable orifices in zones that do not have any corrugations, preferably through the outer wall, enabling the case to be partially evacuated.

21. An insulated pipe, preferably an undersea pipe for great depths, the pipe being **characterized in that** it includes individual tubular complexes (1) according to any one of claims 1 to 20 placed around said pipe.

22. An insulated pipe according to claim 21, **characterized in that** said individual tubular complexes (1) are disposed contiguously to one another in said longitudinal direction XX' around a said pipe, each having a length lying in the range 2 m to 10 m, and preferably in the range 3 m to 6 m.

23. A set of two coaxial pipes presenting an inner pipe (3) and an outer pipe (2) including individual tubular complexes (1) according to any one of claims 1 to 20 placed in the annular gap between said two pipes, said inner pipe, and preferably said outer pipe, comprising a said insulated pipe according to claim 21 or claim 22.

24. A set of two coaxial pipes according to claim 23, **characterized in that** said outer and inner pipes (2, 3) are interconnected by centralizing mechanical links (12) preferably comprising parts made of plastics material, more preferably of elastomer, parts against which said ends (8a, 8b) of some of said tubular complexes (1) come into abutment.

25. A set of two coaxial pipes according to claim 23 or claim 24, **characterized in that** the pressure in the gap between said two pipes, outside the case, is less than 5 bars, and preferably identical to atmospheric pressure.

26. A set of two pipes according to any one of claims 23 to 25, **characterized in that** it includes insulating complexes according to any one of claims 1 to 16 preferably disposed one after another along said longitudinal direction XX', and also disposed one on another so that an outer insulating complex (1a) covers, where appropriate, the gap zones constituted by the two longitudinal edges (8c, 8d) of a single complex that are close together but not end-joined one to the other of said inner insulating complexes (1b), and where appropriately covers the gap zones constituted by the end edges (8a, 8b) of two of said inner complexes spaced longitudinally end to end.

27. A method of fabricating an insulated pipe or a set of two coaxial pipes according to any one of claims 21 to 26, **characterized by** the following steps:
· preforming a tubular complex according to any one of claims 1 to 11 and 20; and
· threading said tubular complex around one of said pipes or in the inner annular gap in a set of two coaxial pipes.

28. A method of fabricating an insulated pipe or a set of two coaxial pipes according to any one of claims 21 to 26, **characterized by** the following steps:
· making an insulating complex in a plane developed configuration in accordance with any one of claims 12 to 20; and
· forming an insulating complex by bending or winding said complex on a said pipe, where appropriate, on the inner pipe of a set of two coaxial pipes.

29. A method of fabricating an insulated pipe or a set of two coaxial pipes according to any one of claims 23 to 26, the method being **characterized in that** comprises the following steps:
1) applying said insulating material (5) on a first metal strip constituting said inner wall (6) covering a said pipe so that said insulating material presents a tubular shape; then
2) covering said insulating material with a second metal strip that is corrugated to constitute said outer wall (7) of the case; then
3) making said opposite ends (8a, 8b) of said complex by sealing together said respective end edges (6₁, 7₁) of said outer and inner walls; and
4) partially evacuating the case.

30. A method of fabricating an insulating complex according to any one of claims 1 to 20, the method being **characterized by** the following steps:
1) applying said insulating material (5) on a first metal strip constituting said inner wall (6) itself placed on a tubular mandrel or on a plane surface; then
2) covering said insulating material in a second metal strip that is corrugated, constituting said outer wall (7) of the case; then
3) making said opposite ends of said complex by sealing together said respective end edges (6₁, 7₁) of said outer and inner walls.
